# EUROPEAN PATENT APPLICATION

(11) **EP 4 745 751 A1**
(43) Date of publication of application: **20.05.2026**
(21) Application number: 25778937.0
(22) Date of filing: 27.03.2025
(51) Int. Cl.: G06F 3/14

(54) **DISPLAY METHOD AND RELATED APPARATUS**

(30) Priority: 29.03.2024 CN 202410382880
(71) Applicant: Huawei Technologies Co., Ltd., Shenzhen, Guangdong 518129 (CN)
(72) Inventor: CHENG, Yiyi, Shenzhen, Guangdong 518129 (CN)
(74) Representative: Gill Jennings & Every LLP
(86) International application number: PCT/CN2025/085214
(87) International publication number: WO 2025/201433

(57) **Abstract**

A display method and a related apparatus are provided. The display method is applied to an electronic device, the electronic device includes a trifold display screen, and the trifold display screen includes a first screen, a second screen, and a third screen. The method includes: when the electronic device is in a fully unfolded state, displaying a first interface of a first application on the trifold display screen, where the first interface includes a first control; receiving a first operation performed on the first control; in response to the first operation, displaying the first interface in a first display area, and displaying a second interface of the first application in a second display area, where the first display area and the second display area are areas that do not overlap on the trifold display screen; and in response to the electronic device changing from the fully unfolded state to a semi-folded state, displaying the first interface on the second screen, and displaying the second interface on the third screen, where the fully unfolded state is a device form factor in which the first screen, the second screen, and the third screen are not folded, and the semi-folded state is a device form factor in which the first screen and the second screen face opposite directions, and the second screen and the third screen face a same direction.

## Description

This application claims priority to Chinese Patent Application No. 202410382880.7, filed with the China National Intellectual Property Administration on March 29, 2024 and entitled "DISPLAY METHOD AND RELATED APPARATUS", which is incorporated herein by reference in its entirety.

### TECHNICAL FIELD

This application relates to the field of electronic technologies, and in particular, to a display method and a related apparatus.

### BACKGROUND

As electronic technologies continuously develop, functions of electronic devices are increasingly enriched. A plurality of electronic devices support in-application split-screen display, that is, different interfaces of a same application are displayed in two non-overlapping windows.

Different types of electronic devices may store different configuration files. A configuration file indicates one or more applications that support in-application split-screen display in a current electronic device. The electronic device may determine, based on the configuration file, whether to use in-application split-screen display for one application.

However, the foregoing manner is applicable only to a case in which the electronic device is with a single form factor, and is not applicable to a case in which the electronic device includes devices with different form factors.

### SUMMARY

This application provides a display method and a related apparatus, to configure display modes of an electronic device with different form factors, and determine, based on a current device form factor, whether an application supports in-application split-screen display when the device is in the current form factor, expanding the applicability.

According to a first aspect, this application provides a display method, applied to an electronic device. The electronic device includes a trifold display screen, the trifold display screen includes two foldable edges, the trifold display screen is divided into three split screens by the two foldable edges, and the three split screens include a first screen, a second screen, and a third screen. The method includes: when the electronic device is in a fully unfolded state, displaying a first interface of a first application on the trifold display screen, where the first interface includes a first control; receiving a first operation performed by a user on the first control; in response to the first operation, displaying the first interface in a first display area of the trifold display screen, and displaying a second interface of the first application in a second display area of the trifold display screen, where the first display area and the second display area are areas do not overlap; and in response to the electronic device changing from the fully unfolded state to a semi-folded state, displaying the first interface on the second screen, and displaying the second interface on the third screen, where the fully unfolded state is a device form factor in which the first screen, the second screen, and the third screen are not folded, and the semi-folded state is a device form factor in which the first screen and the second screen face opposite directions, and the second screen and the third screen face a same direction.

Therefore, if the first application supports in-application split-screen display when the electronic device is in the fully unfolded state, and also supports in-application split-screen display when the electronic device is in the semi-folded state, after changing from the fully unfolded state to the semi-folded state, the electronic device may display a plurality of interfaces of the first application in an in-application split-screen display mode.

In a possible implementation, the method further includes: in response to the electronic device changing from the semi-folded state to a fully folded state, displaying the first interface on the first screen, where the fully folded state is a device form factor in which the three split screens of the trifold display screen are folded based on the two foldable edges.

Therefore, if the first application supports in-application split-screen display when the electronic device is in the semi-folded state, and does not support in-application split-screen display when the electronic device is in the fully folded state, after changing from the semi-folded state to the fully folded state, the electronic device may display the first application in a regular display mode.

In a possible implementation, the method further includes: in response to the electronic device changing from the fully folded state to the semi-folded state, displaying the first interface on the second screen, and displaying the second interface on the third screen.

Therefore, if the first application supports in-application split-screen display when the electronic device is in the semi-folded state, and does not support in-application split-screen display when the electronic device is in the fully folded state, after changing from the fully folded state to the semi-folded state, the electronic device may display the plurality of interfaces of the first application in the in-application split-screen display mode.

In a possible implementation, the method further includes: in response to the electronic device changing from the semi-folded state to the fully unfolded state, displaying the first interface in the first display area, and displaying the second interface in the second display area.

Therefore, if the first application supports in-application split-screen display when the electronic device is in the semi-folded state or the fully unfolded state, after changing from the semi-folded state to the fully unfolded state, the electronic device may display the plurality of interfaces of the first application in the in-application split-screen display mode.

In a possible implementation, the method further includes: in response to the electronic device changing from the fully folded state to the fully unfolded state, displaying the first interface in the first display area, and displaying the second interface in the second display area.

Therefore, if the first application supports in-application split-screen display when the electronic device is in the fully unfolded state, and does not support in-application split-screen display when the electronic device is in the fully folded state, after changing from the fully folded state to the fully unfolded state, the electronic device may display the plurality of interfaces of the first application in the in-application split-screen display mode.

In a possible implementation, the displaying the first interface of the first application on the trifold display screen specifically includes: displaying the first interface of the first application in a third display area of the trifold display screen, where the third display area includes a partial area of the first screen, the second screen, and a partial area of the third screen.

Therefore, the electronic device in the fully unfolded state may display the interfaces of the first application in the in-application split-screen display mode through a single window.

In a possible implementation, the electronic device stores a first file, and the first file includes a first indication field. When the electronic device is in the fully unfolded state, the method further includes: determining, based on the first indication field, that a first list includes a first indicator of the first application, where the first list indicates an application that supports in-application split-screen display when the electronic device is in the fully unfolded state. In response to the first operation, the displaying the first interface in the first display area of the trifold display screen, and displaying the second interface of the first application in the second display area of the trifold display screen specifically includes: in response to the first operation, based on the first indicator in the first list, displaying the first interface in the first display area of the trifold display screen, and displaying the second interface of the first application in the second display area of the trifold display screen.

Therefore, whether the first application supports in-application split-screen display when the device is in different forms may be determined based on the first indication field. The first indicator may be an indicator of the first application.

In a possible implementation, before the displaying the first interface of the first application on the trifold display screen, the method further includes: receiving a second operation of opening the first application by the user. The displaying the first interface of the first application on the trifold display screen specifically includes: in response to the second operation, displaying the first interface of the first application on the trifold display screen based on the first indicator in the first list.

Therefore, when the electronic device is in the fully unfolded state, after receiving the operation of opening the first application by the user and determining, based on the first list, that the first application supports in-application split-screen display (that is, the first list includes the first indicator), the electronic device may display the interfaces of the first application in the in-application split-screen display mode.

In a possible implementation, the first indication field includes a first form identifier, and there is a mapping relationship between the first form identifier and the fully unfolded state. The determining, based on the first indication field, that the first list includes the first indicator of the first application specifically includes: determining, based on the first form identifier in the first indication field, that the first list includes the first indicator.

Therefore, when the first indication field includes the first form identifier, the electronic device may determine that the first application supports split-screen display when the electronic device is in the fully unfolded state, that is, determine that the first list includes the first indicator of the first application.

In a possible implementation, in response to the electronic device changing from the fully unfolded state to the semi-folded state, the method further includes: determining, based on the first indication field, that a second list includes the first indicator of the first application, where the second list indicates an application that supports in-application split-screen display when the electronic device is in the semi-folded state. The displaying the first interface on the second screen, and displaying the second interface on the third screen specifically includes: based on the first indicator in the second list, displaying the first interface on the second screen, and displaying the second interface on the third screen.

Therefore, when detecting that the device form factor changes from the fully unfolded state to the semi-folded state, the electronic device may display the interfaces of the first application in the in-application split-screen display mode after determining, based on the second list, that the first application supports in-application split-screen display (that is, the second list includes the first indicator).

In a possible implementation, the first indication field includes a second form identifier, and there is a mapping relationship between the second form identifier and the semi-folded state. The determining, based on the first indication field, that the second list includes the first indicator of the first application specifically includes: determining, based on the second form identifier in the first indication field, that the second list includes the first indicator.

Therefore, when the first indication field includes the second form identifier, the electronic device may determine that the first application supports split-screen display when the electronic device is in the semi-folded state, that is, determine that the second list includes the first indicator of the first application.

In a possible implementation, the first file further includes a second indication field, and when the electronic device is in the fully unfolded state, the method further includes: determining, based on the second indication field, that the first list includes a second indicator of a second application; receiving a third operation of opening the second application by the user; in response to the third operation, displaying a third interface of the second application on the trifold display screen based on the second indicator in the first list, where the third interface includes a second control; receiving a fourth operation performed by the user on the second control; and in response to the fourth operation, based on the second indicator in the first list, displaying the third interface in the first display area, and displaying a fourth interface of the second application in the second display area.

Therefore, when the electronic device is in the fully unfolded state, the electronic device may further determine, based on the second indication field, whether the second application supports in-application split-screen display when the electronic device is in the fully unfolded state (that is, determine whether the first list includes the second indicator of the second application). When the first list includes the second indicator of the second application, the electronic device may display the interfaces of the second application in the in-application split-screen display mode.

In a possible implementation, the method further includes: in response to the electronic device changing from the fully unfolded state to the semi-folded state, determining, based on the second indication field, that the second list does not include the second indicator, where the second list indicates the application that supports in-application split-screen display when the electronic device is in the semi-folded state; and displaying the third interface on the second screen and the third screen based on the second list.

Therefore, when the electronic device changes the device form factor, the electronic device may determine, based on the second indication field, whether the second application supports in-application split-screen display when the electronic device is in a changed device form factor (that is, determine whether the second list includes the second indicator). If the second list does not include the second indicator, the electronic device may display the interfaces of the second application in the regular display mode.

In a possible implementation, the method further includes: in response to the electronic device changing from the semi-folded state to the fully unfolded state, determining, based on the second indication field, that the first list includes the second indicator; and based on the second indicator in the first list, displaying the third interface in the first display area, and displaying the fourth interface of the second application in the second display area.

Therefore, if the second list does not include the second indicator, and the first list includes the second indicator, after the electronic device changes from the semi-folded state to the fully unfolded state, the electronic device may display a plurality of interfaces of the second application in the in-application split-screen display mode.

In a possible implementation, when the electronic device is in the semi-folded state, the first screen is off, or the first screen is partially on.

According to a second aspect, this application provides an electronic device. The electronic device includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the display method in any possible implementation of any aspect.

According to a third aspect, an embodiment of this application provides a readable storage medium, including instructions. When the instructions are run on an electronic device, the electronic device is enabled to perform the display method in any possible implementation of any aspect.

According to a fourth aspect, an embodiment of this application provides a computer program product. When the computer program product runs on an electronic device, the electronic device is enabled to perform the display method in any possible implementation of any aspect.

For beneficial effect of the second aspect to the fourth aspect, refer to beneficial effect of the first aspect.

### BRIEF DESCRIPTION OF DRAWINGS

FIG. 1A and FIG. 1B are a group of diagrams of interfaces in a display mode 1 according to an embodiment of this application;
FIG. 1C and FIG. 1D are a group of diagrams of interfaces in a display mode 2 according to an embodiment of this application;
FIG. 1E is a composition diagram of content of a configuration file W1 according to an embodiment of this application;
FIG. 2A to FIG. 2F are a group of diagrams of device form factors of an electronic device 100 according to an embodiment of this application;
FIG. 3A is a diagram of a hardware structure of an electronic device 100 according to an embodiment of this application;
FIG. 3B is a diagram of a software architecture of an electronic device 100 according to an embodiment of this application;
FIG. 4A-1, FIG. 4A-2, and FIG. 4A-3 are a schematic flowchart of a display method according to an embodiment of this application;

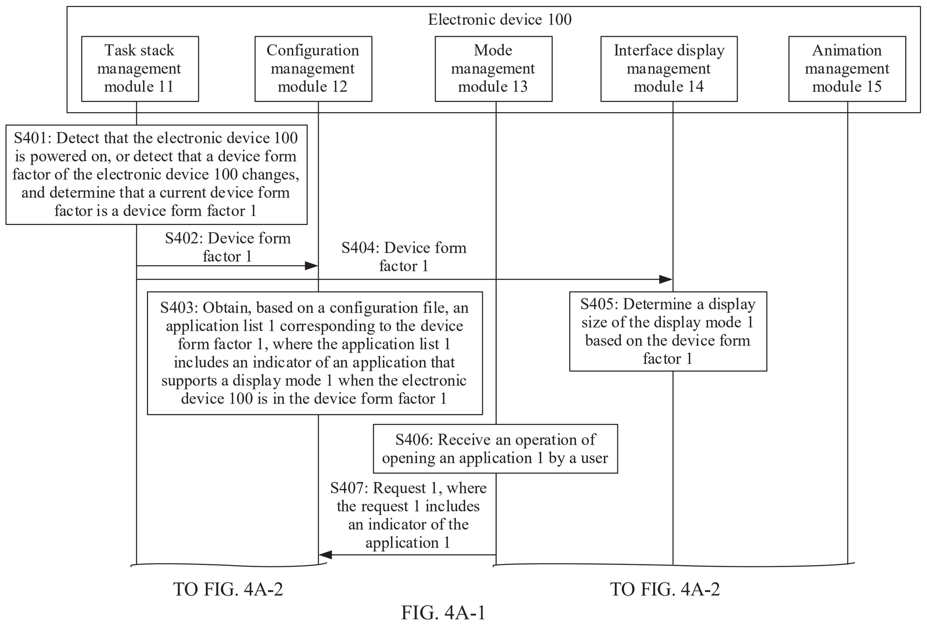

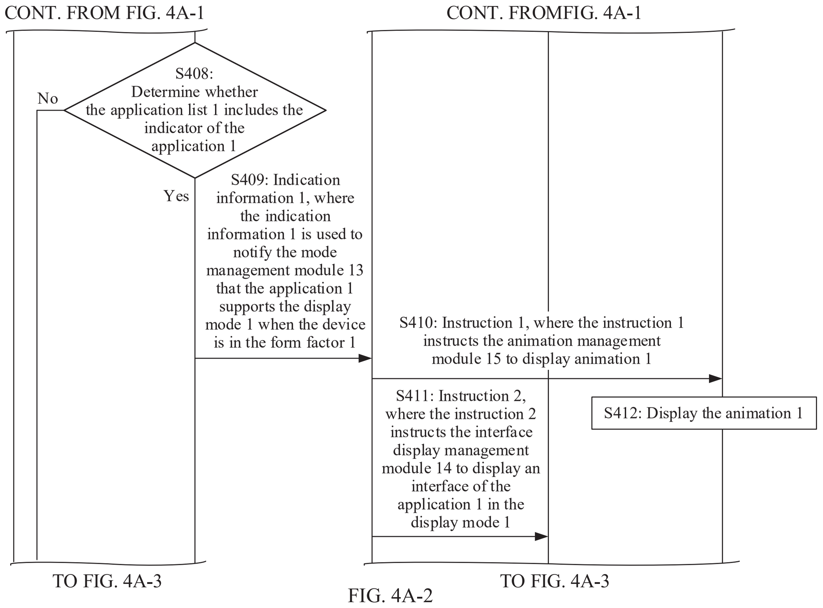

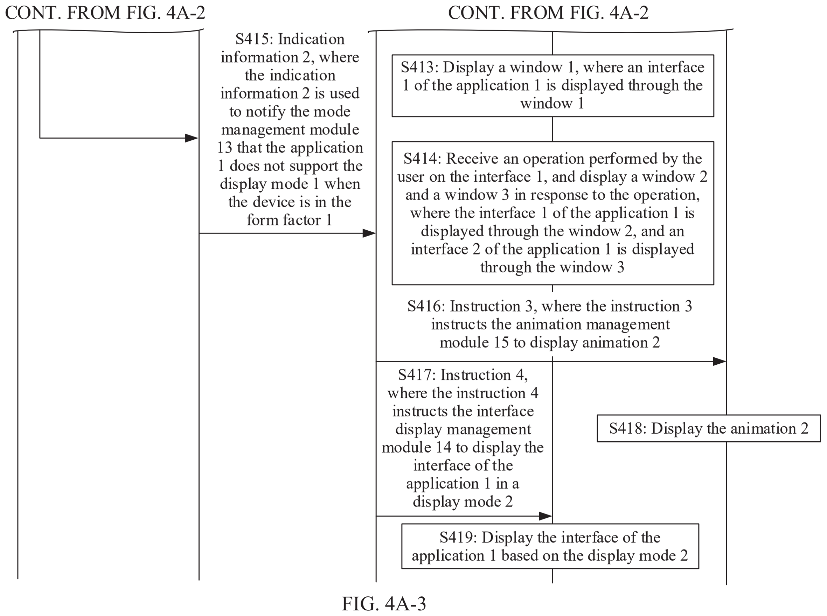

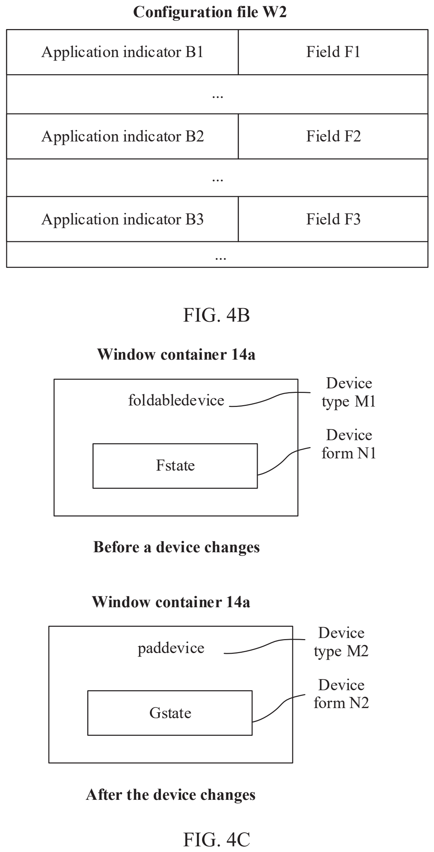

FIG. 4B is a composition diagram of content of a configuration file W2 according to an embodiment of this application;
FIG. 4C is a composition diagram of content stored in a window container 14a before and after a device form factor changes according to an embodiment of this application;

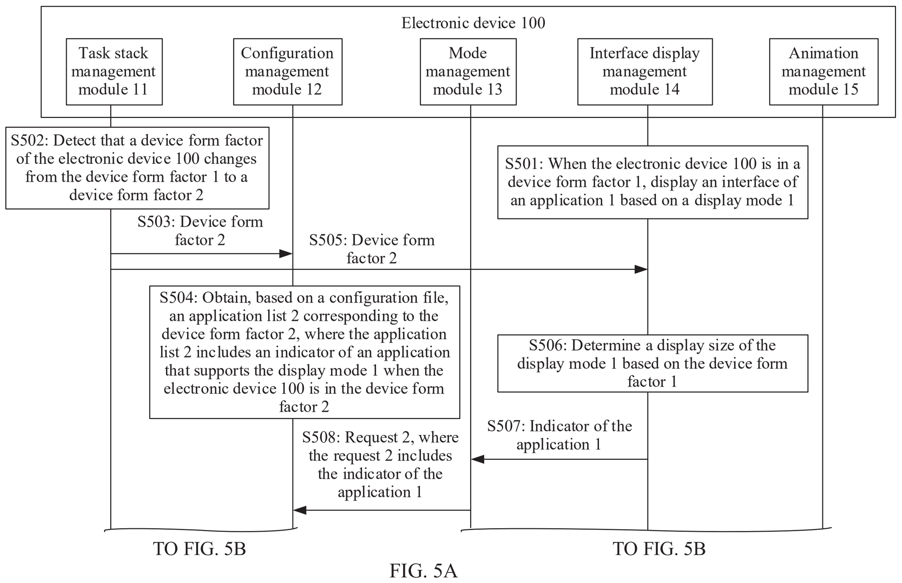

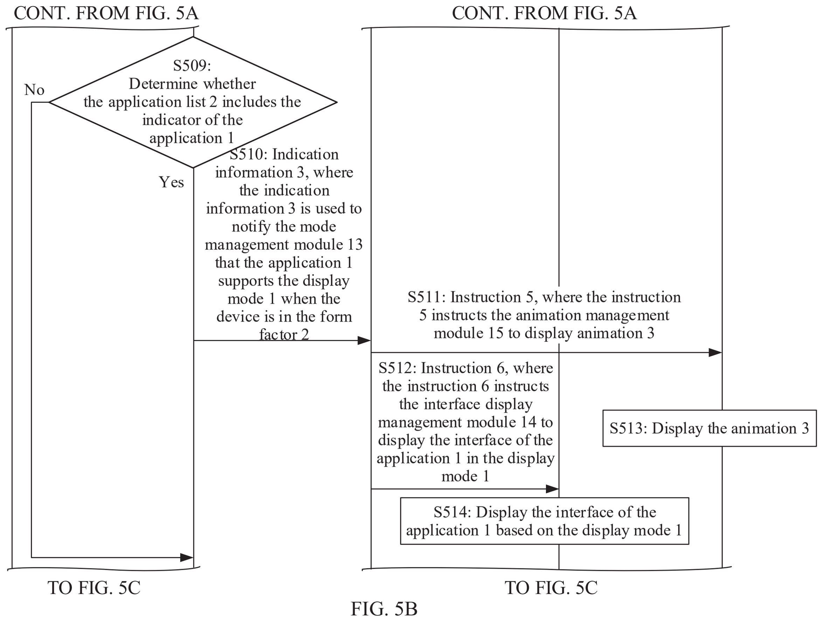

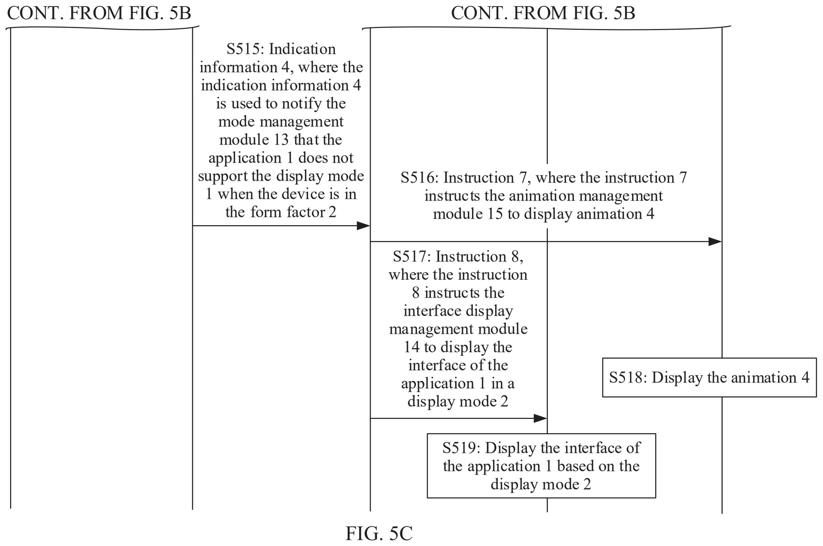

FIG. 5A, FIG. 5B, and FIG. 5C are a schematic flowchart of another display method according to an embodiment of this application;

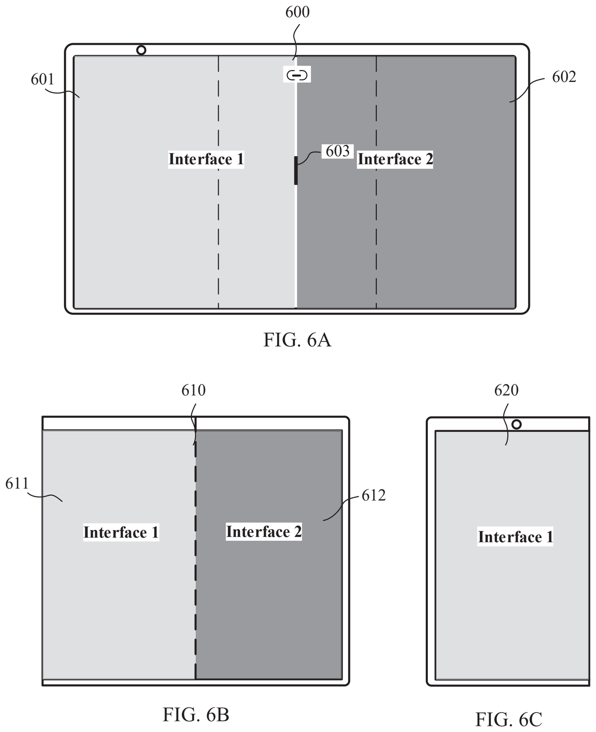

FIG. 6A to FIG. 6C are a group of diagrams of interfaces of an electronic device 100 before and after a form changes according to an embodiment of this application;

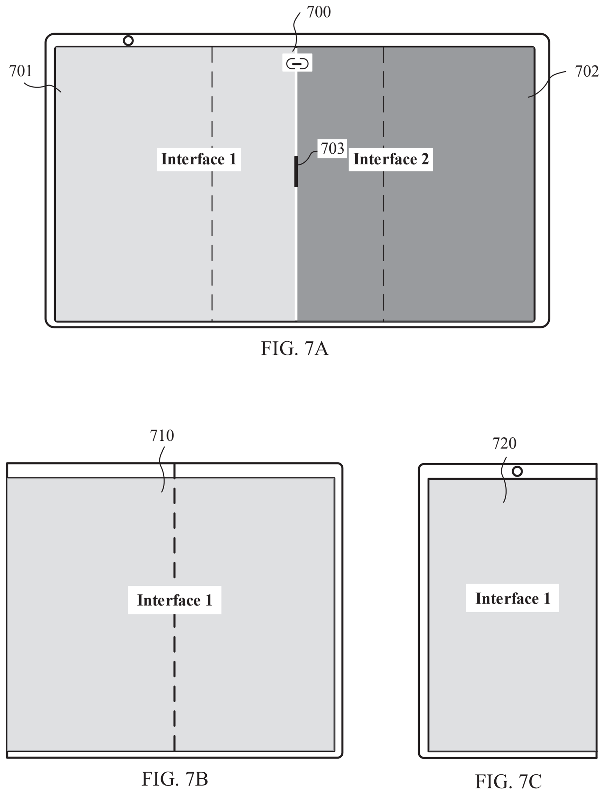

FIG. 7A to FIG. 7C are another group of diagrams of interfaces of an electronic device 100 before and after a form changes according to an embodiment of this application;

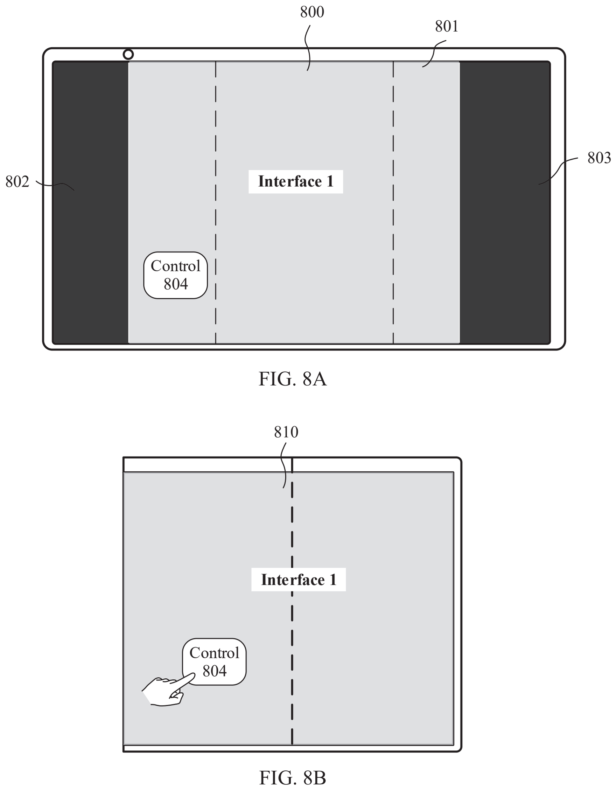

FIG. 8A to FIG. 8D are another group of diagrams of interfaces of an electronic device 100 before and after a form changes according to an embodiment of this application;

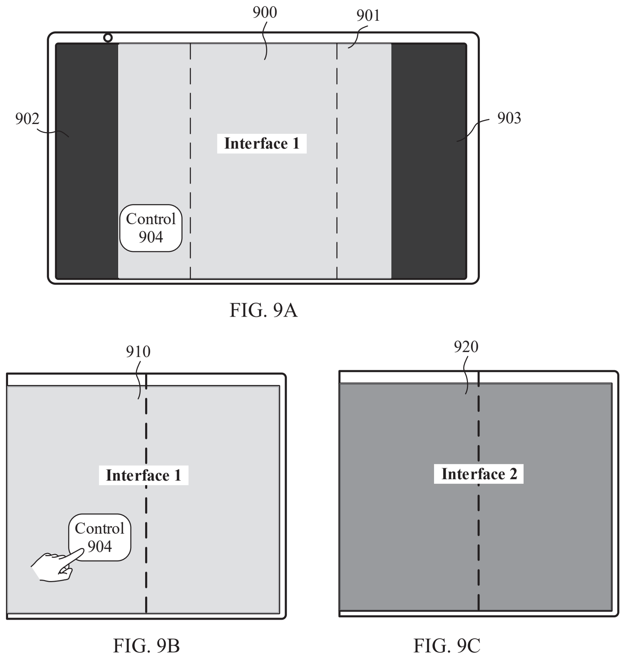

FIG. 9A to FIG. 9C are another group of diagrams of interfaces of an electronic device 100 before and after a form changes according to an embodiment of this application; and

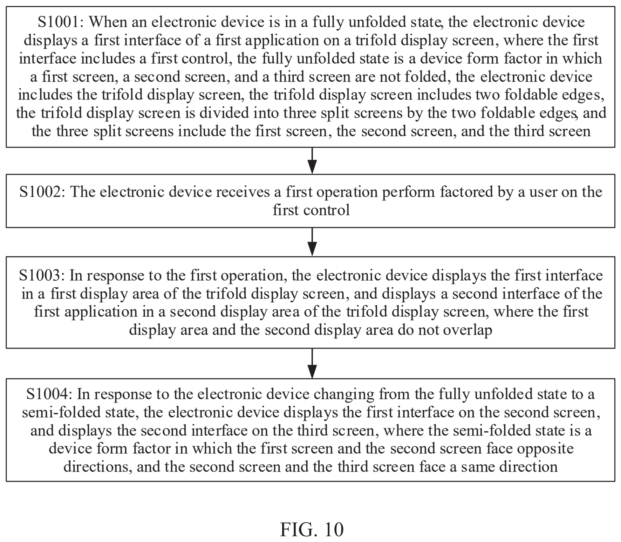

FIG. 10 is a schematic flowchart of a display method according to an embodiment of this application.

### DESCRIPTION OF EMBODIMENTS

Technical solutions according to embodiments of this application are clearly and completely described in the following with reference to accompanying drawings. In the descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The terms "first" and "second" used below are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, "a plurality of" means two or more than two, unless otherwise specified.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be recognized by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display screen of the electronic device.

Embodiments of this application provide two display modes: a display mode 1 and a display mode 2. The display mode 1 may also be referred to as an in-application split-screen display mode (or an App Multiplier mode), and the display mode 2 may also be referred to as a regular display mode. An application 1 is an application installed on an electronic device. When the application 1 supports the display mode 1, the electronic device may receive an operation of opening the application 1 by the user, and display, in response to the operation, the application 1 in the display mode 1. The display mode 1 includes two cases: single-window display and multi-window display. During single-window display, the electronic device 100 may display an interface of the application 1 through a single window, and a display size of the single window is less than or equal to a size of a currently available display area. During multi-window display, the electronic device 100 may display different interfaces of the application 1 through a plurality of windows, and the plurality of windows do not overlap. When the application 1 does not support the display mode 1, the electronic device may receive the operation of opening the application 1 by the user, and display, in response to the operation, the application 1 in the display mode 2.

The following uses specific examples to describe the two display modes provided in this application.

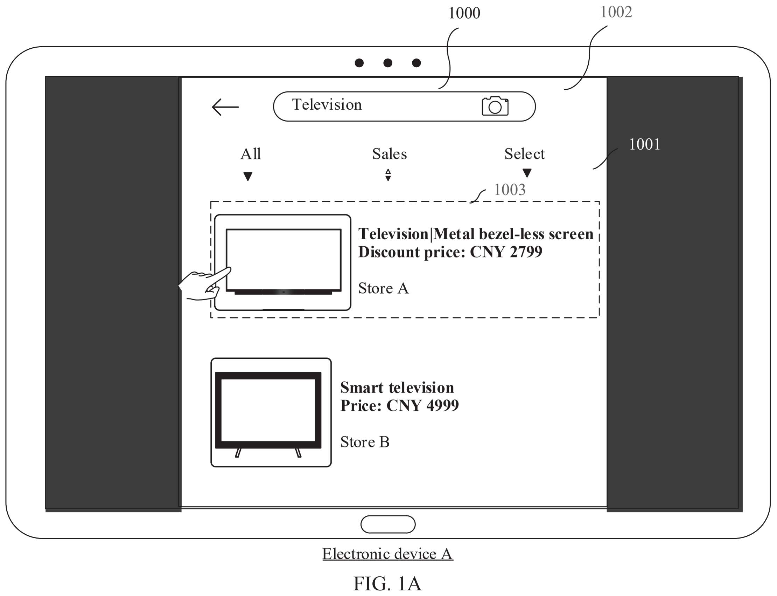

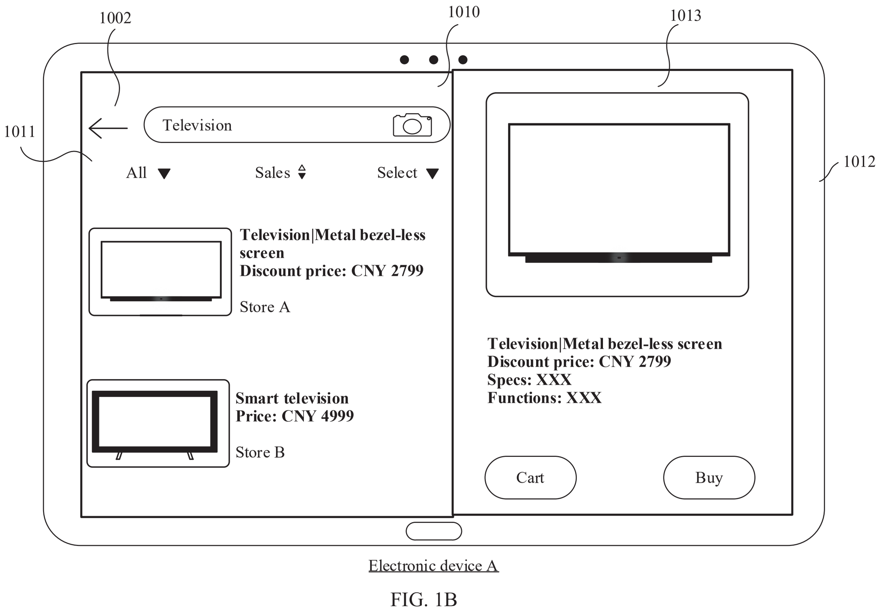

For example, FIG. 1A and FIG. 1B are a group of diagrams of interfaces in the display mode 1.

As shown in FIG. 1A, a display screen of an electronic device A may display an interface 1000, the interface 1000 may include a window 1001, and a display size of the window 1001 may be less than a display size of the interface 1000. The window 1001 may display an interface 1002 of a shopping application. The interface 1002 may include one or more commodity items, for example, a commodity item 1003. Each commodity item 1003 may be used to trigger the electronic device A to display detailed information of the commodity item.

The electronic device A may receive a tap operation performed by the user on the commodity item 1003, and display, in response to the tap operation, an interface 1010 shown in FIG. 1B.

As shown in FIG. 1B, the interface 1010 may include a window 1011 and a window 1012, and the window 1011 and the window 1012 do not overlap. The interface 1002 of the shopping application may be displayed through the window 1011, an interface 1013 of the shopping application may be displayed through the window 1012, and the detailed information of the commodity item 1003 is displayed in the interface 1013. In some embodiments, a display size of the window 1011 is the same as a display size of the window 1012, and the display size of the window 1011 is less than that of the window 1001 shown in FIG. 1A.

Therefore, when the display mode 1 is used, the user may view different interfaces of the application 1 through different windows. This facilitates use for the user, and brings better usage experience to the user.

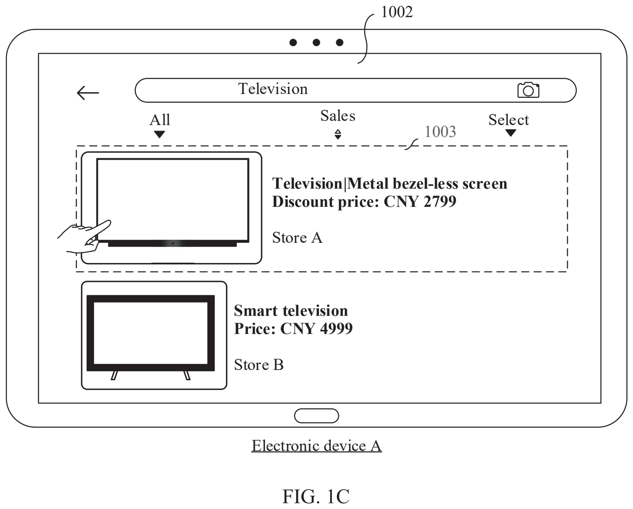

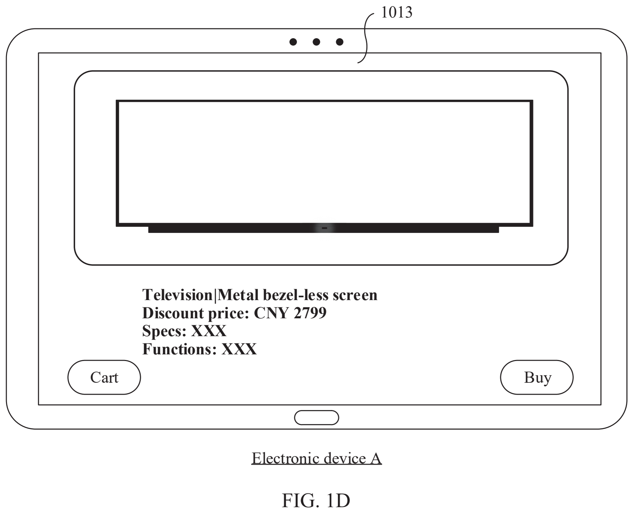

For another example, FIG. 1C and FIG. 1D are a group of diagrams of interfaces in the display mode 2.

As shown in FIG. 1C, when the shopping application does not support the display mode 1, the display screen of the electronic device A may display the interface 1002 of the shopping application. The display size of the interface 1002 is the same as a size of the display screen and is greater than the display size of the window 1001 shown in FIG. 1A. The interface 1002 may include the commodity item 1003. For other specific content of the interface 1002, refer to related descriptions in the embodiment shown in FIG. 1A. Details are not described herein again.

The electronic device A may receive a tap operation performed by the user on the commodity item 1003 in the interface 1002 shown in FIG. 1C, and display, in response to the tap operation, the interface 1013 shown in FIG. 1D.

As shown in FIG. 1D, a display size of the interface 1013 is the same as the size of the display screen and is greater than the display size of the window 1012 shown in FIG. 1B. In addition, for specific content of the interface 1013, refer to related descriptions in the embodiment shown in FIG. 1B. Details are not described herein again.

Therefore, when the application 1 does not support the display mode 1, the electronic device may display the interface of the application 1 in the display mode 2, that is, display the interface of the application 1 through a single window in the entire area of the display screen.

It may be understood that the embodiments shown in FIG. 1A to FIG. 1D are merely examples for describing interface display forms in the display mode 1 and the display mode 2. In embodiments of this application, the application 1 may alternatively be an application other than the shopping application. In addition, when the display mode 1 is used, display sizes of the windows may be different from the foregoing display sizes. A specific display size of the window is not limited in this application.

The electronic device A may be a tablet computer in the embodiments shown in FIG. 1A to FIG. 1D, a foldable smartphone, another type of electronic device, or the like. A specific type of the electronic device A is not limited in this application.

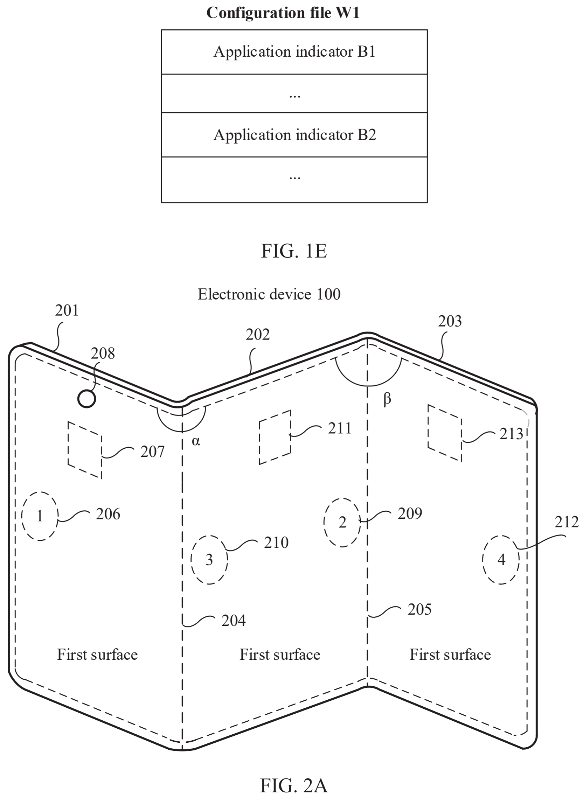

For example, FIG. 1E is a composition diagram of content of a configuration file W1 according to an embodiment of this application.

As shown in FIG. 1E, the configuration file W1 may include one or more application indicators. Each application indicator may correspond to one application installed on the electronic device A, and the application indicator in the configuration file W1 may indicate an application that supports the display mode 1. For example, the one or more application indicators may include an application indicator B1 and an application indicator B2. The application indicator B1 may be an indicator of the application 1, and the application indicator B2 may be an indicator of an application 2. It can be learned from the configuration file W1 shown in FIG. 1E that, in a plurality of applications installed on the electronic device A, applications that support the display mode 1 may include the application 1 and the application 2.

It may be understood that the embodiment shown in FIG. 1E is merely an example for description. The electronic device A may determine, based on the configuration file W1, whether an application supports the display mode 1. In embodiments of this application, the configuration file W1 may further include more or fewer application indicators than those in the foregoing embodiment, or include application indicators different from those in the foregoing embodiment. This is not limited in this application.

Therefore, when the electronic device A is powered on, the electronic device A may determine an application list E1 based on the configuration file W1. The application list E1 may include indicators of all applications, in the electronic device A, that support the display mode 1. Therefore, when receiving the operation of opening the application 1 by the user, the electronic device A may determine, based on the application list E1, whether the application list E1 includes the indicator of the application 1. If the application list E1 includes the indicator of the application 1, the electronic device A may display the interfaces of the application 1 in the display mode 1. If the application list E1 does not include the indicator of the application 1, the electronic device A may display the interface of the application 1 in the display mode 2.

However, if the electronic device A has a plurality of device form factors, for example, the electronic device A is an electronic device with a foldable screen, sizes of available display areas of the display screen with different form factors are different, and applications that support the display mode 1 may not be the same. If the configuration file W1 shown in FIG. 1E is still used, the electronic device A needs to set a plurality of different configuration files for different device form factors. Consequently, more memories are occupied, and power consumption is increased during operating.

The following describes device form factors of an electronic device provided in embodiments of this application.

Currently, flexible materials are used as substrates for display screens of a plurality of electronic devices, so that the display screens can be folded along a foldable edge. The display screen that can be folded may be referred to as a foldable screen. The electronic device with a foldable screen may be referred to as a foldable device. The foldable edge in the foldable screen may divide the display screen into a plurality of split screens. A hinge may be disposed at the foldable edge, and the split screen may rotate around the hinge at the foldable edge. As foldable screen technologies develop, the foldable screen is no longer limited to one foldable edge, and may have a plurality of foldable edges. A foldable screen with two foldable edges may be referred to as a trifold screen. The two foldable edges may divide the trifold screen into three split screens. The three split screens of the trifold screen may display user interfaces independently, or may display one user interface in combination. An electronic device with a trifold screen may be referred to as a trifold device.

Embodiments of this application provide a foldable device operation method and a related apparatus. In response to an operation of rotating a split screen of the foldable screen along a foldable edge by the user, the electronic device may obtain parameters such as a landscape/portrait state, an angle between the foldable screen and a horizontal plane, an angular velocity at which the user rotates the split screen, a rotation angle of the split screen, and stay duration of the split screen after being rotated. Further, the electronic device may provide a corresponding application function based on an application in the electronic device and one or more of the foregoing parameters. The application function may be preset by the electronic device, or may be preset by the user. Therefore, the user can quickly implement some application functions only by rotating the split screen without tapping the foldable screen, to improve operation efficiency and usage experience of the user.

For ease of description and better understanding, the following embodiments of this application use a trifold device as an example to describe the foldable device operation method and the related apparatus provided in embodiments of this application. A person skilled in the art should understand that for an operation method of another multi-fold screen electronic device, refer to the trifold device operation method. An operation method of another electronic device with a foldable screen is not described in this application.

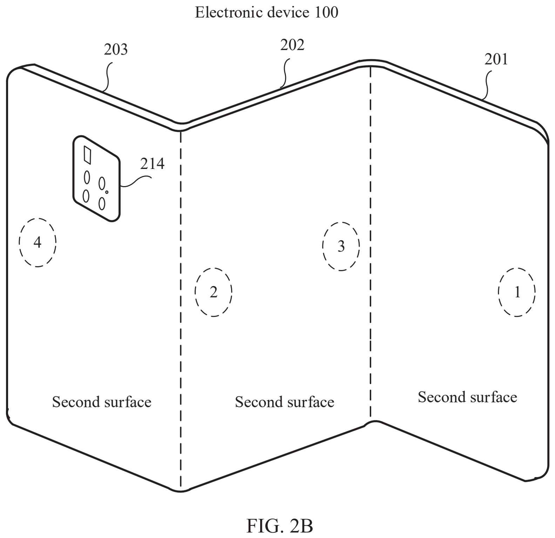

A trifold screen is used as an example. For example, FIG. 2A an FIG. 2B are a group of diagrams of device form factors of an electronic device 100 according to an embodiment of this application.

As shown in FIG. 2A, the electronic device 100 may include three split screens. The three split screens may be: a screen A 201, a screen B 202, and a screen C 203. A first hinge 204 may be disposed at an intersection line of the screen A 201 and the screen B 202. A second hinge 205 may be disposed at an intersection line of the screen B 202 and the screen C 203. The intersection line of the screen A 201 and the screen B 202 and the intersection line of the screen B 202 and the screen C 203 may also be referred to as foldable edges of the electronic device 100. In embodiments of this application, the screen A 201 may also be referred to as a first split screen, the screen B 202 may also be referred to as a second split screen, and the screen C 203 may also be referred to as a third split screen.

The screen A 201, the screen B 202, and the screen C 203 each may have two surfaces: a first surface and a second surface. The first surface and the second surface of each split screen are surfaces opposite to each other.

For example, FIG. 2A shows the first surfaces of the screen A 201, the screen B 202, and the screen C 203. FIG. 2B shows the second surfaces of the screen A 201, the screen B 202, and the screen C 203.

The first surfaces of the screen A 201, the screen B 202, and the screen C 203 may be used to display a user interface. It is not limited to that the first interfaces are used to display the user interface. In some embodiments, one or more of the second surface of the screen A 201, the second surface of the screen B 202, and the second surface of the screen C 203 may also be used to display the user interface. A quantity of surfaces, of the split screens, used to display the user interface in the electronic device 100 is not limited in embodiments of this application.

The first hinge 204 and the second hinge 205 may be configured to rotate the split screens in the electronic device 100. In some embodiments, the first hinge 204 may include an angular velocity sensor, configured to calculate an included angle between the screen A 201 and the screen B 202. The second hinge 205 may also include an angular velocity sensor, configured to calculate an included angle between the screen B 202 and the screen C 203.

In some embodiments, an included angle between the first surface of the screen A 201 and the first surface of the screen B 202 may be referred to as α, and an included angle between the first surface of the screen B 202 and the first surface of the screen C 203 may be referred to as β.

A value range of α may be from 180° to 360°. When the screen A 201 and the screen B 202 are located on a same plane, α is 180°. When the second surface of the screen A 201 is in contact with the second surface of the screen B 202, α is 360°. When α is 360°, the screen A 201 may rotate, to be located on a same plane as the screen B 202, around the first hinge 204 in a direction in which the second surface of the screen A 201 is away from the second surface of the screen B 202. During rotation of the screen A 201, a value of α may gradually change from 360° to 180°. Alternatively, when α is 360°, the screen B 202 may rotate, to be located on a same plane as the screen A 201, around the first hinge 204 in a direction in which the second surface of the screen B 202 is away from the second surface of the screen A 201.

A value range of β may be from 0° to 180°. When the screen B 202 and the screen C 203 are located on a same plane, β is 180°. When the first surface of the screen B 202 is in contact with the first surface of the screen C 203, β is 0°. When β is 0°, the screen B 202 may rotate, to be located on a same plane as the screen C 203, around the second hinge 205 in a direction in which the first surface of the screen B 202 is away from the first surface of the screen C 203. During rotation of the screen B 202, a value of β may gradually change from 0° to 180°. Alternatively, when β is 0°, the screen C 203 may rotate, to be located on a same plane as the screen C 203, around the second hinge 205 in a direction in which the first surface of the screen C 203 is away from the first surface of the screen B 202.

In some embodiments, the value range of α is from 180° to 360°, and the value range of β is from 0° to 180°. In some other embodiments, the screen A 201, the screen B 202, and the screen C 203 may have different folding manners, that is, the value ranges of α and β may be different. For example, the screen A 201, the screen B 202, or the screen C 203 may alternatively rotate 360° around the hinges, a value range of α may be from 0° to 360°, and a value range of β may alternatively be from 0° to 360°. Rotation angles of the screen A 201, the screen B 202, and the screen C 203 are not limited in embodiments of this application.

In embodiments of this application, when a difference between α and 360° is less than an angle threshold, it may be referred to as that the screen A 201 and the screen B 202 are folded. For example, the angle threshold may be 10°, 20°, 30°, or the like. When the difference between α and 360° is greater than an angle threshold, it may be referred to as that the screen A 201 and the screen B 202 are unfolded. For example, the angle threshold may be 150°, 160°, 170°, or the like. A value of the angle threshold is not limited in this application. When α is 180°, it may be referred to as that the screen A 201 and the screen B 202 are fully unfolded.

In embodiments of this application, when β is less than an angle threshold, it may be referred to as that the screen B 202 and the screen C 203 are folded. For example, the angle threshold may be 10°, 20°, 30°, or the like. When β is greater than an angle threshold, it may be referred to as that the screen B 202 and the screen C 203 are unfolded. For example, the angle threshold may be 150°, 160°, 170°, or the like. A value of the angle threshold is not limited in this application. When β is 180°, it may be referred to as that the screen B 202 and the screen C 203 are fully unfolded.

In some embodiments, the screen A 201 may include a first Hall sensor 206, a first sensor module 207, and a front-facing camera 208. The front-facing camera 208 may be located on the first surface of the screen A 201. The screen B 202 may include a second Hall sensor 209, a third Hall sensor 210, and a second sensor module 211. The screen C 203 may include a fourth Hall sensor 212, a third sensor module 213, and a rear-facing camera 214. The rear-facing camera 214 may be located on the second surface of the screen C 203.

The first Hall sensor 206, the second Hall sensor 209, the third Hall sensor 210, and the fourth Hall sensor 212 are semiconductor electromagnetic devices. The first Hall sensor 206 and the second Hall sensor 209 may be used by the electronic device 100 to determine that the screen A 201 and the screen B 202 are folded or unfolded. The third Hall sensor 210 and the fourth Hall sensor 212 may be used by the electronic device 100 to determine that the screen B 202 and the screen C 203 are folded or unfolded.

In some embodiments, the first Hall sensor 206 may be disposed at a position that is on the screen A 201 and that is away from the first hinge 204. The second Hall sensor 209 may be disposed at a position that is on the screen B 202 and that is close to the second hinge 205. A distance between the first Hall sensor 206 and the first hinge 204 may be the same as a distance between the second Hall sensor 209 and the first hinge 204. A straight line connecting the first Hall sensor 206 and the second Hall sensor 209 may be perpendicular to a straight line on which the first hinge 204 is located.

In some embodiments, the third Hall sensor 210 may be disposed at a position that is on the screen B 202 and that is close to the first hinge 204. The fourth Hall sensor 212 may be disposed at a position that is on the screen C 203 and that is away from the second hinge 205. A distance between the third Hall sensor 210 and the second hinge 205 may be the same as a distance between the fourth Hall sensor 212 and the second hinge 205. A straight line connecting the third Hall sensor 210 and the fourth Hall sensor 212 may be perpendicular to a straight line on which the second hinge 205 is located.

The position is not limited. In some other embodiments, the first Hall sensor 206, the second Hall sensor 209, the third Hall sensor 210, and the fourth Hall sensor 212 may alternatively be located at other positions in the electronic device 100. Positions of the first Hall sensor 206, the second Hall sensor 209, the third Hall sensor 210, and the fourth Hall sensor 212 in the electronic device 100 are not limited in embodiments of this application.

In a possible implementation, when magnitude of a magnetic field between the Hall sensors is greater than a threshold, the Hall sensors may generate electrical signals. The electronic device 100 may determine, by detecting whether the Hall sensors generate electrical signals, that the two split screens are folded or unfolded. The first Hall sensor 206 and the second Hall sensor 209 are used as an example. When the screen A 201 and the screen B 202 are folded, the first Hall sensor 206 in the screen A 201 and the second Hall sensor 209 in the screen B 202 gradually approach each other. A magnetic field between the first Hall sensor 206 and the second Hall sensor 209 enhances. When magnitude of the magnetic field reaches a threshold, the first Hall sensor 206 and the second Hall sensor 209 may output electrical signals. The electronic device 100 may detect the electrical signals output by the first Hall sensor 206 and the second Hall sensor 209, to determine that the screen A 201 and the screen B 202 are folded. When the screen A 201 and the screen B 202 are unfolded, the first Hall sensor 206 in the screen A 201 and the second Hall sensor 209 in the screen B 202 gradually move away from each other. The magnetic field between the first Hall sensor 206 and the second Hall sensor 209 weakens. When the magnitude of the magnetic field is less than a threshold, the first Hall sensor 206 and the second Hall sensor 209 may stop outputting electrical signals. The electronic device 100 may detect that the first Hall sensor 206 and the second Hall sensor 209 stop outputting electrical signals, to determine that the screen A 201 and the screen B 202 are unfolded.

In another possible implementation, a current of the electrical signal generated by the Hall sensor may be related to the magnitude of the magnetic field. A stronger magnetic field detected by the Hall sensor indicates a larger current of the electrical signal generated by the Hall sensor. The electronic device 100 may determine, based on a change of the current, that the two split screens are folded or unfolded. The first Hall sensor 206 and the second Hall sensor 209 are used as an example. When detecting that currents of the electrical signals output by the first Hall sensor 206 and the second Hall sensor 209 increase, the electronic device 100 may determine that the screen A 201 and the screen B 202 are gradually folded. When detecting that the currents of the electrical signals output by the first Hall sensor 206 and the second Hall sensor 209 decrease, the electronic device 100 may determine that the screen A 201 and the screen B 202 are gradually unfolded.

For a method in which the electronic device 100 determines, by using the third Hall sensor 210 and the fourth Hall sensor 212, that the screen B 202 and the screen C 203 are folded or unfolded, refer to the method in which the electronic device 100 determines that the screen A 201 and the screen B 202 are folded or unfolded in the foregoing embodiment. Details are not described herein again.

The first sensor module 207 may include an acceleration sensor and a gyroscope sensor. The acceleration sensor may be configured to determine an acceleration of the screen A 201 during rotation. The electronic device 100 may use the acceleration sensor in the first sensor module 207 to measure a motion acceleration of the screen A 201 when being rotated, and then calculate, based on the measured motion acceleration, an angle at which the screen A 201 is rotated around the first hinge 204. The acceleration sensor may further measure motion accelerations of the electronic device in a horizontal direction and a vertical direction. The electronic device 100 may determine, based on the motion accelerations, a rotation angle of the electronic device relative to a horizontal plane, to determine a landscape/portrait mode. The electronic device 100 may further use the gyroscope sensor in the first sensor module 207 to measure an angle between the screen A 201 and another split screen and an angle between the screen A 201 and the horizontal plane. In some embodiments, the electronic device 100 may use the acceleration sensor and the gyroscope sensor in combination to determine a rotation angle of the screen A 201, the landscape/portrait mode, the angle between the screen A 201 and the horizontal plane, and the like, to improve accuracy of measurement results. Similarly, the second sensor module 211 and the third sensor module 213 each may also include an acceleration sensor and a gyroscope sensor. For descriptions of the second sensor module 211 and the third sensor module 213, refer to the foregoing descriptions of the first sensor module 207. Details are not described herein again. Positions of the first sensor module 207, the second sensor module 211, and the third sensor module 213 in the electronic device 100 are not limited in embodiments of this application.

The front-facing camera 208 may include one or more cameras, configured to capture a static image or a video.

The rear-facing camera 214 may include one or more cameras, configured to capture a static image or a video.

In some embodiments, the electronic device 100 may alternatively include more cameras. For example, cameras may alternatively be disposed on the second surface of the screen A 201, the first surface of the screen B 202, and the first surface of the screen C 203. A quantity and positions of cameras in the electronic device 100 are not limited in embodiments of this application.

It may be understood that the structure shown in embodiments of this application does not constitute a specific limitation on the electronic device 100. The electronic device 100 may include components more or fewer components than those shown in the figure, or some components may be combined, or some components may be split, or different component arrangements may be used. The components shown in the figure may be implemented by hardware, software, or a combination of software and hardware.

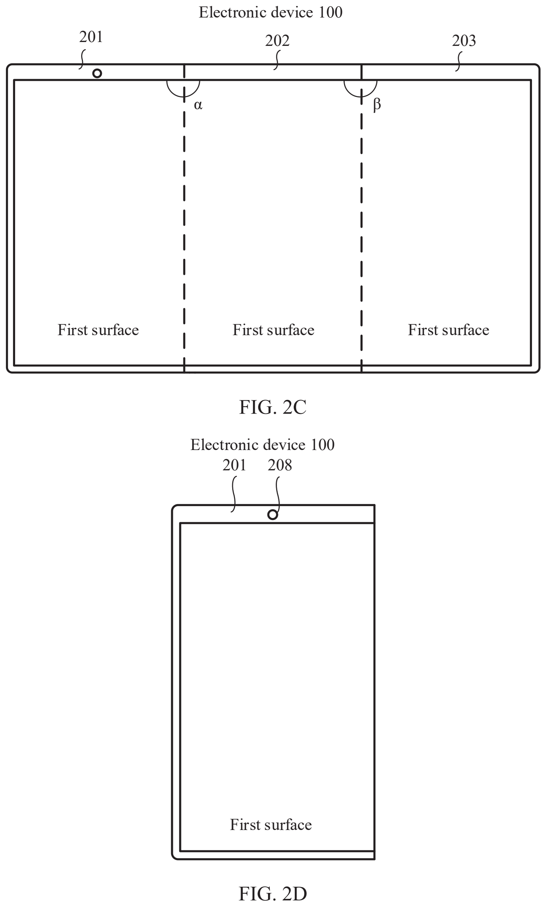

The following describes a group of diagrams of device form factors of an electronic device 100 according to an embodiment of this application with reference to FIG. 2C to FIG. 2F.

FIG. 2C is a diagram of a device form factor of an electronic device 100 in a fully unfolded state according to an embodiment of this application.

As shown in FIG. 2C, the device form factor of the electronic device 100 is the fully unfolded state. When the electronic device 100 is in the fully unfolded state, the screen A 201, the screen B 202, and the screen C 203 of the electronic device 100 may be located on a same plane. The included angle α between the first surface of the screen A 201 and the first surface of the screen B 202 may be 180°, and the included angle β between the first surface of the screen B 202 and the first surface of the screen C 203 may be 180°.

FIG. 2D is a diagram of a device form factor of an electronic device 100 in a fully folded state according to an embodiment of this application.

As shown in FIG. 2D, the device form factor of the electronic device 100 is the fully folded state. When the electronic device 100 is in the fully folded state, the included angle α between the first surface of the screen A 201 and the first surface of the screen B 202 may be 360°, and the included angle β between the first surface of the screen B 202 and the first surface of the screen C 203 may be 0°. At the foregoing angle, the second surface of the screen A 201 is in contact with the second surface of the screen B 202, the first surface of the screen B 202 may be in contact with the first surface of the screen C 203, and the screen B 202 is folded between the screen A 201 and the screen C 203. Only the first surface of the screen A 201 and the second surface of the screen C 203 are exposed externally.

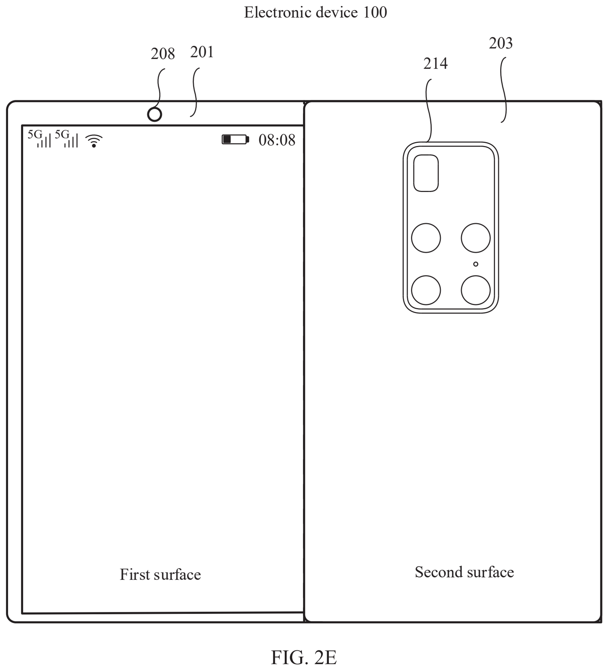

FIG. 2E is a diagram of a device form factor of an electronic device 100 in a B-C folded state according to an embodiment of this application.

As shown in FIG. 2E, the device form factor of the electronic device 100 is the B-C folded state. When the electronic device 100 is in the B-C folded state, the included angle α between the first surface of the screen A 201 and the first surface of the screen B 202 may be 180°, and the included angle β between the first surface of the screen B 202 and the first surface of the screen C 203 may be 0°. In the B-C folded state, the screen A 201 and the screen B 202 are located on a same plane, the first surface of the screen B 202 may be in contact with the first surface of the screen C 203, and the first surface of the screen B 202 and the first surface of the screen C 203 may be in a screen-off state.

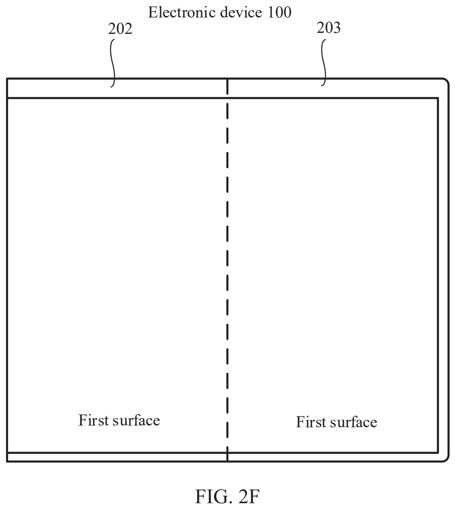

FIG. 2F is a diagram of a device form factor of an electronic device 100 in an A-B folded state according to an embodiment of this application.

As shown in FIG. 2F, the device form factor of the electronic device 100 is the A-B folded state. When the electronic device 100 is in the A-B folded state, the included angle α between the first surface of the screen A 201 and the first surface of the screen B 202 may be 360°, and the included angle β between the first surface of the screen B 202 and the first surface of the screen C 203 may be 180°. In the A-B folded state, the second surface of the screen A 201 may be in contact with the second surface of the screen B 202, and the screen C 203 may not be in contact with the other split screens. In the A-B folded state, the first surface of the screen A 201 may be in a screen-off state. In embodiments of this application, the A-B folded state may also be referred to as a semi-folded state.

A person skilled in the art should understand that the foregoing division method for the foldable states is merely used as an example. The electronic device 100 may include more or fewer foldable states. The following embodiments of this application describe the foldable device operation method by using the fully unfolded state, the fully folded state, the B-C folded state, and the A-B folded state as examples. For an operation method of the electronic device 100 in another foldable state, refer to the operation method of the electronic device 100 in the fully unfolded state, the fully folded state, the B-C folded state, and the A-B folded state in the following embodiments. Details are not described herein.

It may be understood that the foregoing embodiments shown in FIG. 2C to FIG. 2F are merely examples. In some embodiments, the electronic device 100 may alternatively be another multi-fold screen device, and the electronic device 100 may alternatively include more or fewer device form factors than those in the foregoing embodiments, or different device form factors from those in the foregoing embodiments. This is not limited in this application.

In some embodiments, the electronic device 100 may detect conversion of the foregoing foldable states based on the Hall sensor in the electronic device 100. Optionally, the electronic device 100 may alternatively detect conversion of the foregoing foldable states based on one or more of the gyroscope sensor, the acceleration sensor, and an angle sensor in the electronic device 100. A method in which the electronic device 100 detects conversion of the foldable states is not limited in embodiments of this application.

The following describes a hardware structure of an electronic device 100 provided in embodiments of this application.

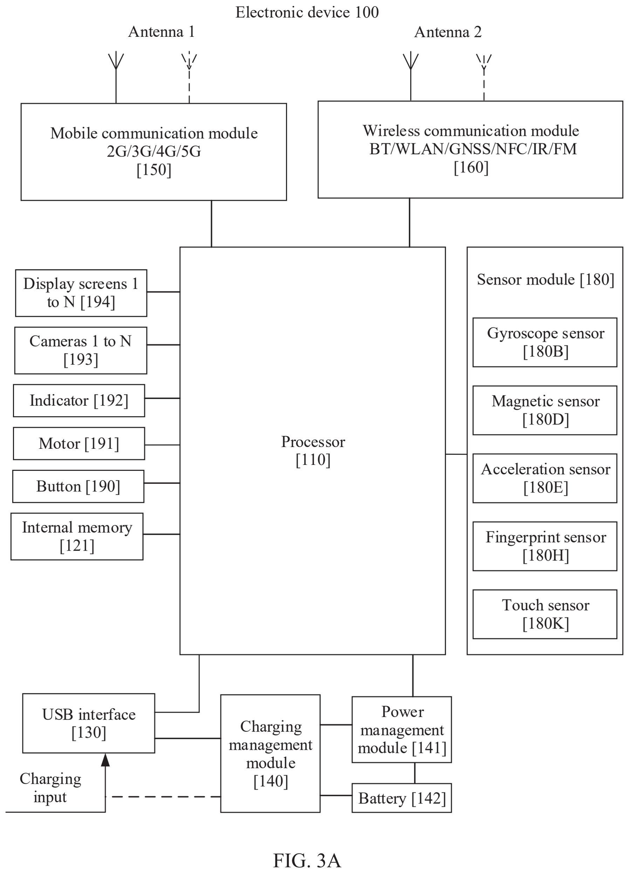

FIG. 3A is a diagram of a hardware structure of an electronic device 100 according to an embodiment of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

As shown in FIG. 3A, the electronic device 100 may include a processor 110, an internal memory 121, a universal serial bus (universal serial bus, USB) interface 130, a charging management module 140, a power management module 141, a battery 142, a wireless communication module 160, a sensor module 180, a display screen 194, and the like. The sensor module 180 may include a touch sensor 180K. Optionally, the sensor module 180 may further include any one or more of the following: a gyroscope sensor 180B, a magnetic sensor 180D, an acceleration sensor 180E, a fingerprint sensor 180H, a pressure sensor, a barometric pressure sensor, a distance sensor, an optical proximity sensor, a temperature sensor, an ambient light sensor, a bone conduction sensor, and the like.

In some embodiments, the electronic device 100 may further include any one or more of the following: an antenna 1, an antenna 2, a mobile communication module 150, a button 190, a motor 191, an indicator 192, a camera 193, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

In some embodiments, a wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display screen 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation system, SBAS).

The electronic device 100 may implement a display function by using the GPU, the display screen 194, the application processor, and the like. The GPU is a microprocessor for image processing, and is connected to the display screen 194 and the application processor. The GPU is configured to perform mathematical and geometric computation, and render an image. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD). The display panel may alternatively be manufactured by an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N display screens 194, where N is a positive integer greater than 1. In some embodiments, the display screen of the electronic device 100 is a foldable display screen.

The internal memory 121 may include one or more random access memories (random access memory, RAM) and one or more non-volatile memories (non-volatile memory, NVM).

The random access memory may be directly read and written by using the processor 110. The random access memory may be configured to store an executable program (for example, machine instructions) in an operating system or another running program, and may be configured to store data of a user, data of an application, and the like.

The non-volatile memory may also store the executable program, the data of the user and the application, and the like, and may be loaded into the random access memory in advance, to be directly read and written by the processor 110.

The gyroscope sensor 180B may be configured to determine a moving posture of the electronic device 100. In some embodiments, an angular velocity of the electronic device 100 around three axes (namely, axes x, y, and z) may be determined based on the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, magnitude and a direction of gravity may be detected. The acceleration sensor 180E may be further configured to identify a posture of the electronic device, and is used in an application like switching between a landscape mode and a portrait mode or a pedometer.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The touch sensor 180K is also referred to as a "touch component". The touch sensor 180K may be disposed on the display screen 194, and the touch sensor 180K and the display screen 194 form a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display screen 194. In some other embodiments, the touch sensor 180K may also be disposed on a surface of the electronic device 100 at a position different from that of the display screen 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different areas of the display screen 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The following describes a software architecture of the electronic device 100 provided in embodiments of this application.

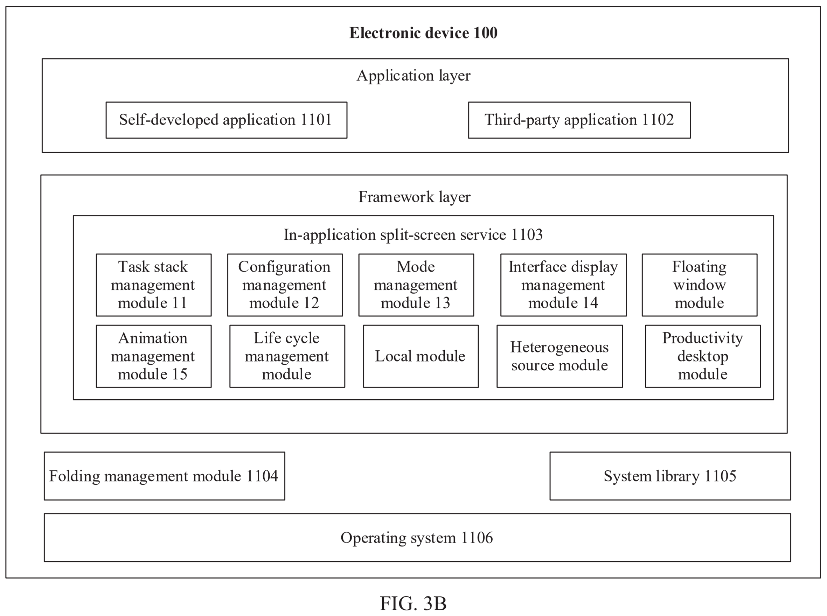

FIG. 3B is a diagram of a software architecture of an electronic device 100 according to an embodiment of this application.

As shown in FIG. 3B, the electronic device 100 may include an application layer, a framework layer, a folding management module 1104, a system library 1105, and an operating system 1106.

The application layer may include a self-developed application 1101 and a third-party application 1102. For example, the self-developed application 1101 may include a setting application and a call application. The third-party application 1102 may include one or more applications developed by a third party. It should be noted that the application 1 in embodiments of this application may be a self-developed application or a third-party application.

The framework layer may include an in-application split-screen service 1103. The in-application split-screen service 1103 may include one or more modules, for example, a task stack management module 11, a configuration management module 12, a mode management module 13, an interface display management module 14, an animation management module 15, a life cycle management module, a local module, a heterogeneous source module, a floating window module, and a productivity desktop module. The task stack management module 11 may be configured to monitor a device form factor of the electronic device 100. The configuration management module 12 may configure, based on the device form factor of the electronic device 100 and a configuration file, an application list that supports the display mode 1 when the device is in the current form factor. The mode management module 13 may be configured to manage a display mode of an application. The interface display management module 14 may be configured to configure a display size of the display mode 1 based on the current device form factor, and may be further configured to display an interface of an application based on different display modes. The animation management module 15 may display corresponding animation based on different display modes. In some embodiments, for specific function descriptions of the plurality of modules such as the task stack management module 11, the configuration management module 12, the mode management module 13, the interface display management module 14, and the animation management module 15, refer to related descriptions in the following embodiments shown in FIG. 4A-1, FIG. 4A-2, and FIG. 4A-3 to FIG. 5A, FIG. 5B, and FIG. 5C. Details are not described herein.

The folding management module 1104 may be configured to manage a device form factor of the electronic device 100. In some embodiments, the folding management module 1104 may obtain a device form factor of the electronic device 100, and send the device form factor to the task stack management module 11.

The system library 1105 may include a plurality of functional modules, for example, a surface manager (surface manager), a media library (media library), a three-dimensional graphics processing library (for example, OpenGL ES), and a 2D graphics engine (for example, SGL).

In some embodiments, the operating system 1106 may be an Android open source project (Android open source project, AOSP). In some other embodiments, another operating system may alternatively be used for the operating system 1106.

It may be understood that the embodiment shown in FIG. 3B is merely an example. In some embodiments, the electronic device 100 may alternatively include more or fewer layers and modules than those in the foregoing embodiment shown in FIG. 3B, or different layers and modules from those in the foregoing embodiment. This is not limited in this application.

This application provides a display method. The electronic device 100 may include a plurality of device form factors, for example, a device form factor 1 and a device form factor 2. When the electronic device 100 is powered on or detects that the device form factor changes, the electronic device 100 may determine that a current device form factor is the device form factor 1, and determine, from a configuration file based on the device form factor 1, an application list 1 that supports the display mode 1 when the device is in the form factor 1. After receiving an operation of opening the application 1 by the user, if the electronic device 100 determines that the application list 1 includes the indicator of the application 1, the electronic device 100 displays the interfaces of the application 1 based on the display mode 1. If the electronic device 100 determines that the application list 1 does not include the indicator of the application 1, the electronic device 100 displays the interface of the application 1 based on the display mode 2.

Therefore, the electronic device 100 may determine, based on the configuration file, an application list that supports the display mode 2 when the device is in the current form factor, and determine a display mode of the application 1 based on the application list. Therefore, a plurality of different device form factors can be adapted to based on only one configuration file. This saves a memory space and reduces operating power consumption.

The following describes a specific procedure of a display method according to embodiments of this application.

FIG. 4A-1, FIG. 4A-2, and FIG. 4A-3 are a schematic flowchart of a display method according to an embodiment of this application.

As shown in FIG. 4A-1, FIG. 4A-2, and FIG. 4A-3, the electronic device 100 may include the task stack management module 11, the configuration management module 12, the mode management module 13, the interface display management module 14, and the animation management module 15. A specific procedure in which the electronic device 100 performs the display method may include the following steps.

S401: The task stack management module 11 detects that the electronic device 100 is powered on, or detects that a device form factor of the electronic device 100 changes, and determines that a current device form factor is a device form factor 1.

For example, the electronic device 100 is a trifold device. Device form factors of the electronic device 100 may include a fully unfolded state, a fully folded state, a B-C folded state, an A-B folded state (which is also referred to as a semi-folded state), and the like. It may be understood that the embodiment herein merely shows some examples. In some other embodiments, the electronic device 100 may alternatively be another multi-fold screen device or the like, and device form factors of the electronic device 100 may alternatively include more or fewer device form factors than those in the foregoing embodiments, or different device form factors from those in the foregoing embodiments. This is not limited in this application.

In some embodiments, when detecting that the electronic device 100 is powered on, the task stack management module 11 may monitor the device form factor of the electronic device 100, and determine that the current device form factor is the device form factor 1.

In some other embodiments, the task stack management module 11 may monitor the device form factor of the electronic device 100 in real time. After detecting that the device form factor of the electronic device 100 changes, the task stack management module 11 may determine that the changed device form factor is the device form factor 1.

It should be noted that after performing step S401, the task stack management module 11 may perform step S402 and step S404 in the following. Step S402 and step S404 may be performed in parallel. A sequence of performing step S402 and step S404 is not limited in this application.

S402: The task stack management module 11 sends the device form factor 1 to the configuration management module 12.

After detecting that the electronic device 100 is powered on, or detecting that the device form factor changes, the task stack management module 11 may send the device form factor, namely, the device form factor 1, to the configuration management module 12.

S403: The configuration management module 12 obtains, based on a configuration file, an application list 1 corresponding to the device form factor 1, where the application list 1 includes an indicator of an application that supports the display mode 1 when the electronic device 100 is in the device form factor 1.

In response to the device form factor 1 sent by the task stack management module 11, the configuration management module 12 may perform step S403.

In some embodiments, the configuration management module 12 may read a configuration file W2 stored in the electronic device 100. The configuration file W2 may include one or more application indicators, and may further include one or more mode indication fields. Each mode indication field corresponds to one application indicator, and each mode indication field indicates whether an application supports the display mode 1 when the device is in different forms.

In some embodiments, the application indicator may be an indicator, for example, an application name, used to identify an application. In some other embodiments, the application indicator may be another indicator. This is not limited in this application.

For example, FIG. 4B is a composition diagram of content of a configuration file W2 according to an embodiment of this application.

As shown in FIG. 4B, the configuration file W2 may include one or more application indicators and one or more mode indication fields. Each application indicator may correspond to one mode indication field. For example, the one or more application indicators may include an application indicator B1, an application indicator B2, and an application indicator B3. The one or more mode indication fields may include a field F1, a field F2, a field F3, and the like. The application indicator B1 is an indicator of an application 1, the field F1 corresponds to the application indicator B1, and the field F1 indicates a device form factor in which the application 1 supports the display mode 1. The application indicator B2 is an indicator of an application 2, the field F2 corresponds to the application indicator B2, and the field F2 indicates a device form factor in which the application 2 supports the display mode 1. The application indicator B3 is an indicator of an application 3, the field F3 corresponds to the application indicator B3, and the field F3 indicates a device form factor in which the application 3 supports the display mode 1. For example, the field F1 may include support_state="pad|semi-folded". It can be learned from the field F1 that the device form factor in which the application 1 supports the display mode 1 may include the fully unfolded state and the semi-folded state. The field F2 may include support_state="semi-folded". It can be learned from the field F2 that the device form factor in which the application 2 supports the display mode 1 may include the semi-folded state. The field F3 may include support_state="pad". It can be learned from the field F3 that the device form factor in which the application 3 supports the display mode 1 may include the fully unfolded state.

It may be understood that the embodiment shown in FIG. 4B is merely an example. In embodiments of this application, the configuration file W2 may further include more or fewer application indicators and mode indication fields than those in the foregoing embodiment, or different application indicators and mode indication fields from those in the foregoing embodiment. In addition, the mode indication fields may indicate different device form factors in a manner different from that in the foregoing embodiment. This is not limited in this application.

The configuration management module 12 may determine, based on the configuration file W2 and the current device form factor (namely, the device form factor 1), the application list 1 corresponding to the current device form factor. For example, the configuration file W2 is the configuration file W2 in the embodiment shown in FIG. 4B, and the current device form factor is the fully unfolded state. In this case, the application list 1 may include the application indicator B1 and the application indicator B3, that is, include the indicator of the application 1 and the indicator of the application 3.

It may be understood that the embodiment herein is merely an example for describing a case in which the application list 1 may be determined based on the configuration file W2 and the current device form factor. In embodiments of this application, the current device form factor may alternatively be a device form factor different from that in the foregoing embodiment, and the application list 1 may include more or less content than that in the foregoing embodiment, or different content from that in the foregoing embodiment. This is not limited in this application.

In some other embodiments, after determining the application list 1, the configuration management module 12 may further send the application list 1 to a setting application, to refresh an application list, in the setting application, that supports the display mode 1. Therefore, when the user views, via the setting application, an application list that supports the display mode 1, the setting application may display an application list that supports the display mode 1 when the device is in the current form factor.

S404: The task stack management module 11 sends the device form factor 1 to the interface display management module 14.

After detecting that the electronic device 100 is powered on, or detecting that the device form factor changes, the task stack management module 11 may send the device form factor, namely, the device form factor 1, to the interface display management module 14.

It should be noted that step S402 and step S404 may be performed in parallel, that is, an execution sequence of step S402 and step S404 is not limited in this application.

S405: The interface display management module 14 determines a display size of the display mode 1 based on the device form factor 1.

The interface display management module 14 may determine an available split screen in the device form factor 1 based on the device form factor 1 sent by the task stack management module 11, and determine the display size of the display mode 1 based on the current available split screen.

For example, the electronic device 100 is the trifold device shown in FIG. 2A to FIG. 2F. If the device form factor 1 is the fully unfolded state, available split screens in the device form factor 1 may include the screen A 201, the screen B 202, and the screen C 203 shown in FIG. 2A. If the device form factor 1 is the fully folded state, the available split screen in the device form factor 1 may include the screen A 201 shown in FIG. 2A. If the device form factor 1 is the semi-folded state, the available split screens in the device form factor 1 may include the screen B 202 and the screen C 203 shown in FIG. 2A.

It may be understood that the embodiment herein is merely an example for describing a case in which the available split screen in the device form factor 1 may be determined based on the device form factor 1. In embodiments of this application, the electronic device 100 may alternatively be another device with a foldable screen, for example, a two-fold screen device or a four-fold screen device. In addition, the device form factor 1 may alternatively include more device form factors than those in the foregoing embodiment. This is not limited in this application.

After determining the available split screen in the device form factor 1, the electronic device 100 may determine the display size of the display mode 1 based on a size of the current available split screen. It should be noted that the display size of the display mode 1 may include but is not limited to any one or more of the following: a display size of a single window in a single-window display case, a display size of each window in a multi-window display case, and the like. The single-window display case is a case in which an application displays an application interface through a single window after the display mode 1 is enabled. In this case, a display size of the window is less than or equal to the size of the available split screen. The multi-window display case is a case in which an application displays different interfaces of the application through a plurality of windows after the display mode 1 is enabled. In this case, the plurality of windows do not overlap.

For example, in the single-window display case, a ratio of a horizontal size of the window to a horizontal size of the current available split screen may be 2:3, and a vertical size of the window may be the same as a vertical size of the current available split screen. In a dual-window display case, a horizontal size of each window may be half of the horizontal size of the current available split screen, and a vertical size of each window may be the same as the vertical size of the current available split screen.

It may be understood that the embodiment herein is merely an example for describing a case in which the display size of the display mode 1 may be determined based on the size of the current available split screen. In embodiments of this application, the display size of the display mode 1 may be different from the size described in the foregoing embodiment. This is not limited in this application.

In some other embodiments, after receiving the current device form factor, the interface display management module 14 may further determine, based on the device form factor 1, a level and a size of a drag bar in the display mode 1 in the single-window case and the multi-window case. This is not limited in this application.

In a possible implementation, the interface display management module 14 may further include a window container 14a. The window container 14a may be configured to manage window display logic, that is, manage display sizes of windows in different display modes and the like. The window container 14a may store the current device form factor, and determine the display size of the display mode 1 based on a device type and the current device form factor. In some embodiments, the window container 14a may further store a customized device type. The customized device type is a device type defined by the electronic device 100 based on the current device form factor, and the customized device type may be updated as the device form factor changes. It should be noted that, different from the customized device type, the device type in embodiments of this application is an inherent device type of the electronic device 100, and the device type is fixed. Therefore, the device type may also be referred to as an inherent device type. There may be a mapping relationship between the customized device type and the device form factor. The electronic device 100 may store a mapping relationship between the device form factor and the customized device type, and update the device form factor and the customized device type in the window container 14a based on the current device form factor. In this case, the electronic device 100 may alternatively determine the display size of the display mode 1 based on the customized device type stored in the window container 14a. For a specific determining manner, refer to related descriptions in the foregoing embodiments. Details are not described herein again.

For example, FIG. 4C is a composition diagram of content stored in a window container 14a before and after a device form factor changes according to an embodiment of this application.

As shown in FIG. 4C, when the electronic device 100 is in the semi-folded state, the window container 14a may store a customized device type M1 and a device form factor N1. The customized device type M1 may include "foldabledevice" indicating that a current customized device type is a foldable device. The device form factor N1 may include "Fstate" indicating that a current device type is a semi-folded state.

When the device form factor of the electronic device 100 changes from the semi-folded state to the fully unfolded state, the electronic device 100 may update, based on the fully unfolded state and the inherent device type (for example, the trifold device) of the electronic device 100, the customized device type stored in the window container 14a to a customized device type M2, and update the device form factor stored in the window container 14a to a device form factor N2. The customized device type M2 may include "paddevice" indicating that the current customized device type is a tablet device. The device form factor N2 may include "Gstate" indicating that the current device type is a fully unfolded state.

It may be understood that the embodiment shown in FIG. 4C is merely an example. In embodiments of this application, the window container 14a may further store more content than that in the foregoing embodiment or different content from that in the foregoing embodiment. In addition, the electronic device 100 may use characters different from those in the foregoing embodiments to indicate the device type and the device form factor. This is not limited in this application.

S406: The mode management module 13 receives an operation of opening the application 1 by the user.

For example, the operation of opening the application 1 by the user may be a tap operation performed by the user on an application icon of the application 1.

In response to the operation of opening the application 1 by the user, the mode management module 13 may perform step S407 in the following.

S407: The mode management module 13 sends a request 1 to the configuration management module 12, where the request 1 includes the indicator of the application 1.

In some embodiments, the request 1 may be used to request the configuration management module 12 to determine whether the application 1 supports the display mode 1 when the device is in the current form factor.

S408: The configuration management module 12 determines whether the application list 1 includes the indicator of the application 1.

When the configuration management module 12 determines that the application list 1 includes the indicator of the application 1, the configuration management module 12 may perform step S409 in the following.

When the configuration management module 12 determines that the application list 1 does not include the indicator of the application 1, the configuration management module 12 may perform step S415 in the following.

S409: The configuration management module 12 sends indication information 1 to the mode management module 13, where the indication information 1 is used to notify the mode management module 13 that the application 1 supports the display mode 1 when the device is in the form factor 1.

S410: The mode management module 13 sends an instruction 1 to the animation management module 15, where the instruction 1 instructs the animation management module 15 to display animation 1.

In response to the indication information 1, the mode management module 13 may perform step S410 and step S411. It should be noted that step S410 and step S411 may be performed in parallel.

S411: The mode management module 13 sends an instruction 2 to the interface display management module 14, where the instruction 2 instructs the interface display management module 14 to display an interface of the application 1 in the display mode 1.

S412: The animation management module 15 displays the animation 1.

The animation 1 may be dynamic effect of changing the display content of the electronic device 100 from the desktop to an interface described in step S413.

S413: The interface display management module 14 displays a window 1, where an interface 1 of the application 1 is displayed through the window 1.

The interface display management module 14 may display the window 1 based on the display size of the display mode 1, and the display size of the window 1 may be the display size in the single-window display case.

S414: The interface display management module 14 receives an operation performed by the user on the interface 1, and displays a window 2 and a window 3 in response to the operation, where the interface 1 of the application 1 is displayed through the window 2, and an interface 2 of the application 1 is displayed through the window 3.

The interface display management module 14 may display the window 2 and the window 3 based on the display size of the display mode 1, and display sizes of the window 2 and the window 3 each may be the display size of the single window in the dual-window display case.

In some embodiments, after the interface display management module 14 displays the window 2 and the window 3, the interface display management module 14 may further receive an operation of adjusting the display sizes of the window 2 and the window 3 by the user, and adjust the display sizes of the window 2 and the window 3 in response to the operation.

S415: The configuration management module 12 sends indication information 2 to the mode management module 13, where the indication information 2 is used to notify the mode management module 13 that the application 1 does not support the display mode 1 when the device is in the form factor 1.

S416: The mode management module 13 sends an instruction 3 to the animation management module 15, where the instruction 3 instructs the animation management module 15 to display animation 2.

In response to the indication information 2, the mode management module 13 may perform step S416 and step S417. It should be noted that step S416 and step S417 may be performed in parallel.

S417: The mode management module 13 sends an instruction 4 to the interface display management module 14, where the instruction 4 instructs the interface display management module 14 to display an interface of the application 1 in a display mode 2.

S418: The animation management module 15 displays the animation 2.

The animation 2 may be dynamic effect of changing the display content of the electronic device 100 from the desktop to an interface described in step S419.

S419: The interface display management module 14 displays the interface of the application 1 based on the display mode 2.

That the interface display management module 14 displays the interface of the application 1 in the display mode 2 may be displaying one interface of the application 1 in an entire area of a currently available split screen.

It may be understood that the embodiment shown in FIG. 4A-1, FIG. 4A-2, and FIG. 4A-3 are merely an example. In embodiments of this application, in a process of the display method provided in embodiments of this application, the electronic device 100 may perform more or fewer steps than those in the foregoing embodiment, or different steps from those in the foregoing embodiment. This is not limited in this application. For example, in some embodiments, the electronic device 100 may not perform step S404. In this case, both the indication information 1 and the instruction 2 may carry the current device form factor (for example, the device form factor 1). After receiving the instruction 2, the interface display management module 14 may perform step S405 and step S413 according to the instruction 2. This is not limited in this application either.

According to the display method provided in embodiments of this application, the electronic device 100 may determine, based on the mode indication field in the configuration file, an application list that supports the display mode 2 when the device is in the current form factor, and determine a display mode of the application 1 based on the application list. Therefore, a plurality of different device form factors can be adapted to based on only one configuration file. This saves a memory space and reduces operating power consumption.

In some application scenarios, before the device form factor is switched, the electronic device 100 may display the interface of the application 1 in the display mode 1. After detecting that is device form factor is switched, the electronic device 100 may also determine the display mode of the application 1 based on the configuration file, and display the interface of the application 1.

For example, FIG. 5A, FIG. 5B, and FIG. 5C are a schematic flowchart of another display method according to an embodiment of this application.

As shown in FIG. 5A, FIG. 5B, and FIG. 5C, the electronic device 100 may include the task stack management module 11, the configuration management module 12, the mode management module 13, the interface display management module 14, and the animation management module 15. A specific procedure in which the electronic device 100 performs the display method may include the following steps.

S501: When the electronic device 100 is in a device form factor 1, the interface display management module 14 displays an interface of an application 1 based on a display mode 1.

In some embodiments, that the interface display management module 14 displays the interface of the application 1 based on the display mode 1 may mean a single-window display case in the display mode 1. For example, the interface display management module 14 displays a window 1, and the interface 1 of the application 1 is displayed through the window 1. A display size of the window 1 is less than a size of an available split screen in the device form factor 1.

In some other embodiments, that the interface display management module 14 displays the interface of the application 1 based on the display mode 1 may mean a multi-window display case in the display mode 1. For example, the interface display management module 14 displays a window 2 and a window 3, an interface 1 of the application 1 is displayed through the window 2, and an interface 2 of the application 1 is displayed through the window 3. The window 2 and the window 3 do not overlap.

S502: The task stack management module 11 detects that a device form factor of the electronic device 100 changes from the device form factor 1 to a device form factor 2.

For specific content of step S502, refer to related descriptions in step S401 shown in FIG. 4A-1, FIG. 4A-2, and FIG. 4A-3.

It should be noted that after performing step S502, the task stack management module 11 may perform step S503 and step S505. In addition, step S503 and step S505 may be performed in parallel. A specific sequence of performing step S503 and step S505 is not limited in this embodiment of this application.

S503: The task stack management module 11 sends the device form factor 2 to the configuration management module 12.

After detecting that the device form factor changes, the task stack management module 11 may send a current device form factor, namely, the device form factor 2, to the configuration management module 12.

It should be noted that step S503 and step S505 in the following may be performed in parallel, and an execution sequence of step S503 and step S505 is not limited in this application.

S504: The configuration management module 12 obtains, based on a configuration file, an application list 2 corresponding to the device form factor 2, where the application list 2 includes an indicator of an application that supports the display mode 1 when the electronic device 100 is in the device form factor 2.

For specific content of step S504, refer to related content in step S403 shown in FIG. 4A-1, FIG. 4A-2, and FIG. 4A-3. Details are not described again in this application.

S505: The task stack management module 11 sends the device form factor 2 to the interface display management module 14.

After detecting that the device form factor changes, the task stack management module 11 may send the device form factor, namely, the device form factor 2, to the interface display management module 14.

S506: The interface display management module 14 determines a display size of the display mode 1 based on the device form factor 1.

For specific content of step S506, refer to related content in step S405 shown in FIG. 4A-1, FIG. 4A-2, and FIG. 4A-3. Details are not described again in this application.

S507: The interface display management module 14 sends an indicator of the application 1 to the mode management module 13.

S508: The mode management module 13 sends a request 2 to the configuration management module 12, where the request 2 includes the indicator of the application 1.

In some embodiments, the request 2 may be used to request the configuration management module 12 to determine whether the application 1 supports the display mode 1 when the device is in the current form factor.

S509: The configuration management module 12 determines whether the application list 2 includes the indicator of the application 1.

When the configuration management module 12 determines that the application list 2 includes the indicator of the application 1, the configuration management module 12 may perform step S510 in the following.

When the configuration management module 12 determines that the application list 2 does not include the indicator of the application 1, the configuration management module 12 may perform step S515 in the following.

S510: The configuration management module 12 sends indication information 3 to the mode management module 13, where the indication information 3 is used to notify the mode management module 13 that the application 1 supports the display mode 1 when the device is in the form factor 2.

S511: The mode management module 13 sends an instruction 5 to the animation management module 15, where the instruction 5 instructs the animation management module 15 to display animation 3.

In response to the indication information 3, the mode management module 13 may perform step S511 and step S512. It should be noted that step S511 and step S512 may be performed in parallel.

S512: The mode management module 13 sends an instruction 6 to the interface display management module 14, where the instruction 6 instructs the interface display management module 14 to display the interface of the application 1 in the display mode 1.

S513: The animation management module 15 displays the animation 3.

The animation 3 may be dynamic effect of changing the display content of the electronic device 100 from the interface described in step S501 to an interface described in step S514.

S514: The interface display management module 14 displays the interface of the application 1 based on the display mode 1.

In some embodiments, if the interface display management module 14 performs single-window display in the display mode 1 in step S501, after the device form factor is switched to the device form factor 2, the interface display management module 14 may continue to display the interface of the application 1 through single-window display. For example, in the device form factor 2, the interface display management module 14 displays a window 4, the interface 1 of the application 1 is displayed through the window 4, a display size of the window 4 is less than a display size of an available split screen in the device form factor 2, and the display size of the window 4 is different from the display size of the window 1 in step S501.

In some other embodiments, if the interface display management module 14 performs multi-window display in the display mode 1 in step S501, after the device form factor is switched to the device form factor 2, the interface display management module 14 may continue to display the interface of the application 1 through multi-window display. For example, when the device is in the form factor 2, the interface display management module 14 displays a window 5 and a window 6, the interface 1 of the application 1 is displayed through the window 5, and the interface 2 of the application 1 is displayed through the window 6. The window 5 and the window 6 do not overlap.

S515: The configuration management module 12 sends indication information 4 to the mode management module 13, where the indication information 4 is used to notify the mode management module 13 that the application 1 does not support the display mode 1 when the device is in the form factor 2.

S516: The mode management module 13 sends an instruction 7 to the animation management module 15, where the instruction 7 instructs the animation management module 15 to display animation 4.

In response to the indication information 4, the mode management module 13 may perform step S516 and step S517. It should be noted that step S516 and step S517 may be performed in parallel.

S517: The mode management module 13 sends an instruction 8 to the interface display management module 14, where the instruction 8 instructs the interface display management module 14 to display the interface of the application 1 in the display mode 2.

S518: The animation management module 15 displays the animation 4.

The animation 4 may be dynamic effect of changing the display content of the electronic device 100 from the interface described in step S501 to an interface described in step S519.

S519: The interface display management module 14 displays the interface of the application 1 based on the display mode 2.

For specific content of step S519, refer to related content in step S419 shown in FIG. 4A-1, FIG. 4A-2, and FIG. 4A-3. Details are not described herein again.

It may be understood that the embodiment shown in FIG. 5A, FIG. 5B, and FIG. 5C are merely an example. In embodiments of this application, in a process of the display method provided in embodiments of this application, the electronic device 100 may perform more or fewer steps than those in the foregoing embodiment, or different steps from those in the foregoing embodiment. This is not limited in this application.

According to the display method provided in embodiments of this application, when the electronic device 100 displays the interface of the application 1 based on the display mode 1, after detecting that the device form factor changes, the electronic device 100 may determine, based on the mode indication field in the configuration file, whether the application 1 supports the display mode 1 when the device is in the changed form, and display the interface of the application 1 based on a determining result.

The following describes, by using specific application scenarios, diagrams of interfaces of the display method provided in embodiments of this application.

In some application scenarios, the electronic device 100 is in the device form factor 1, and the electronic device 100 displays the window 2 and the window 3 based on the display mode 1. The interface 1 of the application 1 is displayed through the window 2, the interface 2 of the application 1 is displayed through the window 3, and the window 2 and the window 3 do not overlap. After the electronic device 100 changes from the device form factor 1 to the device form factor 2, if the electronic device 100 determines that the application 1 supports the display mode 1 when being in the device form factor 2, the electronic device 100 displays the window 5 and the window 6 based on the device form factor 2 and the display mode 1. The interface 1 of the application 1 is displayed through the window 5, the interface 2 of the application 1 is displayed through the window 6, and the window 5 and the window 6 do not overlap.

Therefore, if the application 1 supports the display mode 1 before and after the device form factor changes, the electronic device 100 may display the interface of the application 1 based on the display mode 1 after the device form factor changes.

For example, FIG. 6A to FIG. 6C are a group of diagrams of interfaces of an electronic device 100 before and after a form changes according to an embodiment of this application.

As shown in FIG. 6A, the device form factor of the electronic device 100 is a fully unfolded state, the electronic device 100 displays an interface 600, the interface 600 includes a window 601 and a window 602, and the window 601 and the window 602 do not overlap. The interface 1 of the application 1 may be displayed through the window 601, and the interface 2 of the application 1 may be displayed through the window 602. In some embodiments, a display size of the window 601 is the same as a display size of the window 602. In some other embodiments, the interface 600 may further include a separator bar 603. The separator bar 603 may be used to trigger the electronic device 100 to adjust the display size of the window 601 and the display size of the window 602. For example, the electronic device 100 may receive an operation of dragging the separator bar 603 to the left by the user, and in response to the operation, reduce the display size of the window 601, and increase the display size of the window 602. For another example, the electronic device 100 may receive an operation of dragging the separator bar 603 to the right by the user, and in response to the operation, reduce the display size of the window 602, increase the display size of the window 601, and the like.

After the electronic device 100 changes from the fully unfolded state to the semi-folded state, if the electronic device 100 determines that the application 1 supports the display mode 1 when being in the semi-folded state, the electronic device 100 may display an interface 610 shown in FIG. 6B.

As shown in FIG. 6B, the device form factor of the electronic device 100 is the semi-folded state, and the electronic device 100 displays the interface 610. The interface 610 may include a window 611 and a window 612, and the window 611 and the window 612 do not overlap. The interface 1 of the application 1 may be displayed through the window 611, and the interface 2 of the application 1 may be displayed through the window 612. In some embodiments, a display size of the window 611 is the same as a display size of the window 612. The display size of the window 611 is different from the display size of the window 601 shown in FIG. 6A. It should be noted that, in some embodiments, if the electronic device 100 displays a separator bar (for example, the separator bar 603 shown in FIG. 6A) in the fully unfolded state, after switching from the fully unfolded state to the semi-folded state, the electronic device 100 may not display the separator bar. In other words, the electronic device 100 may not support adjustment of the display sizes of the window 611 and the window 612 in the semi-folded state.

In some other embodiments, if the electronic device 100 displays a separator bar (for example, the separator bar 603 shown in FIG. 6A) in the fully unfolded state, after switching from the fully unfolded state to the semi-folded state, the electronic device 100 may alternatively display the separator bar. The separator bar may be used to adjust the display sizes of the window 611 and the window 612.

After the electronic device 100 changes from the semi-folded state (or the fully unfolded state) to the fully folded state, if the electronic device 100 determines that the application 1 does not support the display mode 1 when being in the fully folded state, the electronic device 100 may display an interface 620 shown in FIG. 6C.

As shown in FIG. 6C, the device form factor of the electronic device 100 is the fully folded state, and the electronic device 100 displays the interface 620. The interface 620 may include the interface 1 of the application 1 in the embodiment shown in FIG. 6B.

It may be understood that the embodiments shown in FIG. 6A to FIG. 6C are merely examples. In some embodiments, the device form factor 1 may be the semi-folded state shown in FIG. 6B, and the device form factor 2 may be the fully unfolded state shown in FIG. 6A. In this case, the interface change of the electronic device 100 may be changing from the interface 610 shown in FIG. 6B to the interface 600 shown in FIG. 6A. In some other embodiments, device form factors of the electronic device 100 may alternatively include more or fewer device form factors than those in the foregoing embodiments, or different device form factors from those in the foregoing embodiments. This is not limited in this application.

In some application scenarios, the electronic device 100 is in the device form factor 1, and the electronic device 100 displays the window 2 and the window 3 based on the display mode 1. The interface 1 of the application 1 is displayed through the window 2, the interface 2 of the application 1 is displayed through the window 3, and the window 2 and the window 3 do not overlap. After the electronic device 100 changes from the device form factor 1 to the device form factor 2, if the electronic device 100 determines that the application 1 does not support the display mode 1 when being in the device form factor 2, the electronic device 100 displays the interface 1 of the application 1 in an entire area of a currently available split screen based on the device form factor 2 and the display mode 2.

Therefore, if the application 1 supports the display mode 1 before the device form factor changes, and the application 1 does not support the display mode 1 after the device form factor changes, the electronic device 100 may display the interface of the application 1 based on the display mode 2 after the device form factor changes.

For example, FIG. 7A to FIG. 7C are another group of diagrams of interfaces of an electronic device 100 before and after a form changes according to an embodiment of this application.

As shown in FIG. 7A, the device form factor of the electronic device 100 is a fully unfolded state, the electronic device 100 displays an interface 700, the interface 700 includes a window 701 and a window 702, and the window 701 and the window 702 do not overlap. The interface 1 of the application 1 may be displayed through the window 701, and the interface 2 of the application 1 may be displayed through the window 702. In some embodiments, a display size of the window 701 is the same as a display size of the window 702. In some other embodiments, the interface 700 may further include a separator bar 703. The separator bar 703 may be used to trigger the electronic device 100 to adjust the display size of the window 701 and the display size of the window 702. For a specific adjustment manner, refer to related descriptions of the separator bar 603 shown in FIG. 6A. Details are not described herein again.

After the electronic device 100 changes from the fully unfolded state to the semi-folded state, if the electronic device 100 determines that the application 1 does not support the display mode 1 when being in the semi-folded state, the electronic device 100 may display an interface 710 shown in FIG. 7B.

As shown in FIG. 7B, the device form factor of the electronic device 100 is the semi-folded state, and the electronic device 100 displays the interface 710. The interface 710 may include the interface 1 of the application 1 in the embodiment shown in FIG. 7A.

After the electronic device 100 changes from the semi-folded state (or the fully unfolded state) to the fully folded state, if the electronic device 100 determines that the application 1 does not support the display mode 1 when being in the fully folded state, the electronic device 100 may display an interface 720 shown in FIG. 7C.

As shown in FIG. 7C, the device form factor of the electronic device 100 is the fully folded state, and the electronic device 100 displays the interface 720. The interface 720 may include the interface 1 of the application 1 in the embodiment shown in FIG. 7B.

It may be understood that the embodiments shown in FIG. 7A to FIG. 7C are merely examples. In some embodiments, the device form factor 1 may be the semi-folded state shown in FIG. 7B or the fully folded state shown in FIG. 7C, and the device form factor 2 may be the fully unfolded state shown in FIG. 7A. In some other embodiments, the device form factor of the electronic device 100 may include more or fewer device form factors than those in the foregoing embodiments, or different device form factors from those in the foregoing embodiments. This is not limited in this application.

In some application scenarios, the electronic device 100 is in the device form factor 1, and the electronic device 100 displays the interface 1 of the application 1 based on the display mode 1. After the electronic device 100 changes from the device form factor 1 to the device form factor 2, if the electronic device 100 determines that the application 1 supports the display mode 1 when being in the device form factor 2, the electronic device 100 displays the interface 1 of the application 1 based on the device form factor 2 and the display mode 1.

Therefore, if the application 1 supports the display mode 1 before and after the device form factor changes, the electronic device 100 may display the interface of the application 1 based on the display mode 1 after the device form factor changes.

For example, FIG. 8A to FIG. 8D are another group of diagrams of interfaces of an electronic device 100 before and after a device form factor changes according to an embodiment of this application.

As shown in FIG. 8A, the device form factor of the electronic device 100 is the fully unfolded state, and the electronic device 100 displays an interface 800. The interface 800 includes a window 801. A display size of the window 801 is less than a size of a currently available split screen. In other words, the interface 800 further includes an area other than the window 801, for example, an area 802 and an area 803. The area 802 and the area 803 may display a blurred background. The interface 1 of the application 1 may be displayed through the window 801, and the window 801 is displayed in the center of the interface 800. The interface 1 may include a control 804, and the control 804 may be used to trigger the electronic device 100 to display the interface 2 of the application 1.

After the electronic device 100 changes from the fully unfolded state to the semi-folded state, if the electronic device 100 determines that the application 1 supports the display mode 1 when being in the semi-folded state, the electronic device 100 may display an interface 810 shown in FIG. 8B.

As shown in FIG. 8B, the device form factor of the electronic device 100 is the semi-folded state, and the electronic device 100 displays the interface 810. The interface 810 may include the interface 1 of an application 1, and the interface 1 may include the control 804. In some embodiments, the interface 1 may occupy an entire area of the interface 810, that is, the interface 810 may be the interface 1. In some other embodiments, the interface 810 may alternatively include one window, and the interface 1 is displayed through the window. An area other than the window in the interface 810 may display a blurred background.

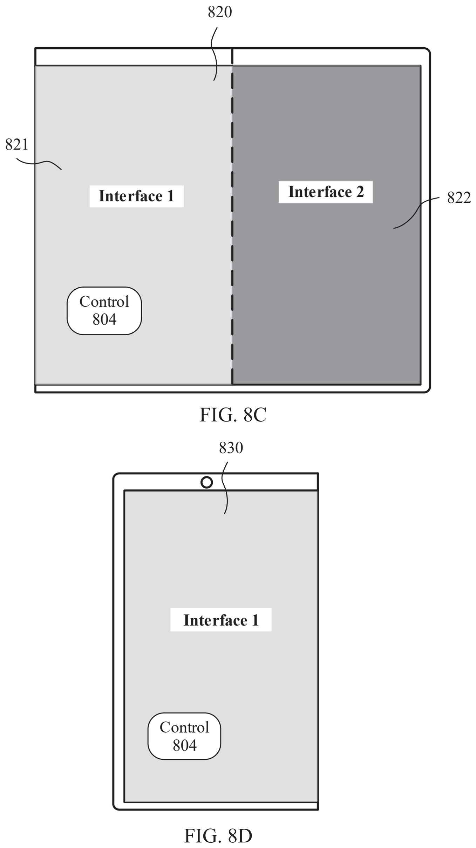

The electronic device 100 may receive a tap operation performed by the user on the control 804 in the interface 1 shown in FIG. 8B, and display, in response to the tap operation, an interface 820 shown in FIG. 8C.

As shown in FIG. 8C, the device form factor of the electronic device 100 is the semi-folded state, the electronic device 100 displays the interface 820, the interface 820 includes a window 821 and a window 822, and the window 821 and the window 822 do not overlap. The interface 1 of the application 1 may be displayed through the window 821, and the interface 2 of the application 1 may be displayed through the window 822. In some embodiments, a display size of the window 821 is the same as a display size of the window 822.

After the electronic device 100 changes from the semi-folded state (or the fully unfolded state) to the fully folded state, if the electronic device 100 determines that the application 1 does not support the display mode 1 when being in the fully folded state, the electronic device 100 may display an interface 830 shown in FIG. 8D.

As shown in FIG. 8D, the device form factor of the electronic device 100 is the fully folded state, and the electronic device 100 displays the interface 830. The interface 830 may include the interface 1 of the application 1 in the embodiment shown in FIG. 8B.

It may be understood that the embodiments shown in FIG. 8A to FIG. 8D are merely examples. In some embodiments, the device form factor 1 may be the semi-folded state shown in FIG. 8B, and the device form factor 2 may be the fully unfolded state shown in FIG. 8A. In some other embodiments, the device form factor of the electronic device 100 may include more or fewer device form factors than those in the foregoing embodiments, or different device form factors from those in the foregoing embodiments. This is not limited in this application.

In some application scenarios, the electronic device 100 is in the device form factor 1, and the electronic device 100 displays the interface 1 of the application 1 based on the display mode 1. After the electronic device 100 changes from the device form factor 1 to the device form factor 2, if the electronic device 100 determines that the application 1 does not support the display mode 1 when being in the device form factor 2, the electronic device 100 displays the interface 1 of the application 1 based on the device form factor 2 and the display mode 2.

Therefore, if the application 1 supports the display mode 1 before the device form factor changes, and the application 1 does not support the display mode 1 after the device form factor changes, the electronic device 100 may display the interface of the application 1 based on the display mode 2 after the device form factor changes.

For example, FIG. 9A to FIG. 9C are another group of diagrams of interfaces of an electronic device 100 before and after a device form factor changes according to an embodiment of this application.

As shown in FIG. 9A, the device form factor of the electronic device 100 is the fully unfolded state, and the electronic device 100 displays an interface 900. The interface 900 includes a window 901. A display size of the window 901 is less than a size of a currently available split screen. In other words, the interface 900 further includes an area other than the window 901, for example, an area 902 and an area 903. The area 902 and the area 903 may display a blurred background. The interface 1 of the application 1 may be displayed through the window 901, and the window 901 is displayed in the center of the interface 900. The interface 1 may include a control 904, and the control 904 may be used to trigger the electronic device 100 to display the interface 2 of the application 1.

After the electronic device 100 changes from the fully unfolded state to the semi-folded state, if the electronic device 100 determines that the application 1 does not support the display mode 1 when being in the semi-folded state, the electronic device 100 may display an interface 910 shown in FIG. 9B.

As shown in FIG. 9B, the device form factor of the electronic device 100 is the semi-folded state, and the electronic device 100 displays the interface 910. The interface 910 may include the interface 1 of the application 1 in the embodiment shown in FIG. 9A. The interface 1 may include the control 904.

The electronic device 100 may receive a tap operation performed by the user on the control 904 in the interface 1 shown in FIG. 9B, and display, in response to the tap operation, an interface 920 shown in FIG. 9C.

As shown in FIG. 9C, the device form factor of the electronic device 100 is the semi-folded state, and the electronic device 100 displays the interface 920. The interface 920 may include the interface 2 of the application 1.

It may be understood that the embodiments shown in FIG. 9A to FIG. 9C are merely examples. In some embodiments, the device form factor 1 may be the semi-folded state shown in FIG. 9B, and the device form factor 2 may be the fully unfolded state shown in FIG. 9A. In some other embodiments, the device form factor of the electronic device 100 may include more or fewer device form factors than those in the foregoing embodiments, or different device form factors from those in the foregoing embodiments. This is not limited in this application.

In some other application scenarios, the electronic device 100 is in the device form factor 1, and determines that the application 1 does not support the display mode 1 when being in the device form factor 1. The electronic device 100 may display the interface 1 of the application 1 based on the display mode 2. In this case, after changing from the device form factor 1 to the device form factor 2, if the electronic device 100 determines that the application 1 supports the display mode 1 when being in the device form factor 2, the electronic device 100 may display the interface 1 of the application 1 based on the display mode 1.

For example, if the device form factor 1 is the fully folded state, and the device form factor 2 is the semi-folded state, the interface change of the electronic device 100 before and after the device form factor changes may be changing from the interface 620 shown in FIG. 6C to the interface 610 shown in FIG. 6B.

For another example, if the device form factor 1 is the semi-folded state, and the device form factor 2 is the fully unfolded state, the interface change of the electronic device 100 before and after the device form factor changes may be changing from the interface 710 shown in FIG. 7B to the interface 700 shown in FIG. 7A.

It may be understood that the foregoing embodiments are merely examples. In embodiments of this application, the device form factor 1 and the device form factor 2 may alternatively be device form factors different from those in the foregoing embodiments, and the electronic device 100 may alternatively include more or fewer device form factors than those in the foregoing embodiments, or different device form factors from those in the foregoing embodiments. This is not limited in this application.

FIG. 10 is a schematic flowchart of a display method according to an embodiment of this application.

As shown in FIG. 10, a specific procedure in which an electronic device performs the display method provided in embodiments of this application may include the following steps.

S1001: When the electronic device is in a fully unfolded state, the electronic device displays a first interface of a first application on a trifold display screen, where the first interface includes a first control, the fully unfolded state is a device form factor in which a first screen, a second screen, and a third screen are not folded, the electronic device includes the trifold display screen, the trifold display screen includes two foldable edges, the trifold display screen is divided into three split screens by the two foldable edges, and the three split screens include the first screen, the second screen, and the third screen.

The electronic device may be the electronic device 100 in the foregoing embodiments.

For specific descriptions of the trifold display screen, refer to related content in the embodiments shown in FIG. 2A to FIG. 2F. For example, the first screen may be the screen A 201 shown in FIG. 2A, the second screen may be the screen B 202, and the third screen may be the screen C 203. The two foldable edges of the trifold screen may be the first hinge 204 and the second hinge 205. It may be understood that the embodiment herein is merely an example. A correspondence between the first screen, the second screen, and the third screen in this embodiment of this application and the screen A 201, the screen B 202, and the screen C 203 in the embodiment shown in FIG. 2A may alternatively be a correspondence different from that in the foregoing embodiment. This is not limited in this application.

The first application may be an application installed on the electronic device. The first application may be a self-developed application (for example, a gallery application), or may be a third-party application (for example, a shopping application).

Refer to the embodiment shown in FIG. 8A. For example, the first interface may be the interface 1 shown in FIG. 8A, and the first control may be the control 804 shown in FIG. 8A.

The fully unfolded state may be the device form factor of the electronic device 100 in the embodiment shown in FIG. 2C.

S1002: The electronic device receives a first operation performed by a user on the first control.

The first operation is used to trigger the electronic device to display a second interface of the first application.

For example, the first operation performed by the user on the first control may be the tap operation performed by the user on the control 804 in the embodiment shown in FIG. 8A.

S1003: In response to the first operation, the electronic device displays the first interface in a first display area of the trifold display screen, and displays the second interface of the first application in a second display area of the trifold display screen, where the first display area and the second display area do not overlap.

For example, in response to the first operation, the electronic device displays the interface 600 shown in FIG. 6A. In this embodiment, the first display area may be an area occupied by the window 601 on the display screen, and the second display area may be an area occupied by the window 602 on the display screen. The first interface may be the interface 1, and the second interface may be the interface 2.

S1004: In response to the electronic device changing from the fully unfolded state to a semi-folded state, the electronic device displays the first interface on the second screen, and displays the second interface on the third screen, where the semi-folded state is a device form factor in which the first screen and the second screen face opposite directions, and the second screen and the third screen face a same direction.

The semi-folded state may be the device form factor of the electronic device 100 in the embodiment shown in FIG. 2F. It should be noted that the orientation of the first screen may be an orientation of the first surface of the screen A 201. Similarly, the orientation of the second screen may be an orientation of the first surface of the screen B 202, and the orientation of the third screen may be an orientation of the first surface of the screen C 203.

Refer to the embodiments shown in FIG. 6A and FIG. 6B. For example, the first interface may be the interface 1 in the embodiments, and the second interface may be the interface 2.

Therefore, if the first application supports in-application split-screen display when the electronic device is in the fully unfolded state, and also supports in-application split-screen display when the electronic device is in the semi-folded state, after changing from the fully unfolded state to the semi-folded state, the electronic device may display a plurality of interfaces of the first application in an in-application split-screen display mode.

In a possible implementation, the method further includes: in response to the electronic device changing from the semi-folded state to a fully folded state, displaying the first interface on the first screen, where the fully folded state is a device form factor in which the three split screens of the trifold display screen are folded based on the two foldable edges.

The fully folded state may be the device form factor of the electronic device 100 in the embodiment shown in FIG. 2D.

Refer to the embodiments shown in FIG. 6B and FIG. 6C. For example, the first interface may be the interface 1 in the embodiments, and the second interface may be the interface 2.

Therefore, if the first application supports in-application split-screen display when the electronic device is in the semi-folded state, and does not support in-application split-screen display when the electronic device is in the fully folded state, after changing from the semi-folded state to the fully folded state, the electronic device may display the first application in a regular display mode.

In a possible implementation, the method further includes: in response to the electronic device changing from the fully folded state to the semi-folded state, displaying the first interface on the second screen, and displaying the second interface on the third screen.

For example, when the electronic device changes from the fully folded state to the semi-folded state, the interface of the electronic device may change from the interface 620 shown in FIG. 6C to the interface 610 shown in FIG. 6B.

Therefore, if the first application supports in-application split-screen display when the electronic device is in the semi-folded state, and does not support in-application split-screen display when the electronic device is in the fully folded state, after changing from the fully folded state to the semi-folded state, the electronic device may display the plurality of interfaces of the first application in the in-application split-screen display mode.

In a possible implementation, the method further includes: in response to the electronic device changing from the semi-folded state to the fully unfolded state, displaying the first interface in the first display area, and displaying the second interface in the second display area.

For example, when the electronic device changes from the semi-folded state to the fully unfolded state, the interface of the electronic device may change from the interface 610 shown in FIG. 6B to the interface 600 shown in FIG. 6A.

Therefore, if the first application supports in-application split-screen display when the electronic device is in the semi-folded state or the fully unfolded state, after changing from the semi-folded state to the fully unfolded state, the electronic device may display the plurality of interfaces of the first application in the in-application split-screen display mode.

In a possible implementation, the method further includes: in response to the electronic device changing from the fully folded state to the fully unfolded state, displaying the first interface in the first display area, and displaying the second interface in the second display area.

For example, when the electronic device changes from the fully folded state to the fully unfolded state, the interface of the electronic device may change from the interface 620 shown in FIG. 6C to the interface 600 shown in FIG. 6A.

Therefore, if the first application supports in-application split-screen display when the electronic device is in the fully unfolded state, and does not support in-application split-screen display when the electronic device is in the fully folded state, after changing from the fully folded state to the fully unfolded state, the electronic device may display the plurality of interfaces of the first application in the in-application split-screen display mode.

In a possible implementation, the displaying the first interface of the first application on the trifold display screen specifically includes: displaying the first interface of the first application in a third display area of the trifold display screen, where the third display area includes a partial area of the first screen, the second screen, and a partial area of the third screen.

Refer to the embodiment shown in FIG. 8A. For example, the third display area may be an area occupied by the window 801 on the display screen.

Therefore, the electronic device in the fully unfolded state may display the interfaces of the first application in the in-application split-screen display mode through a single window.

In a possible implementation, the electronic device stores a first file, and the first file includes a first indication field. When the electronic device is in the fully unfolded state, the method further includes: determining, based on the first indication field, that a first list includes a first indicator of the first application, where the first list indicates an application that supports in-application split-screen display when the electronic device is in the fully unfolded state. In response to the first operation, the displaying the first interface in the first display area of the trifold display screen, and displaying the second interface of the first application in the second display area of the trifold display screen specifically includes: in response to the first operation, based on the first indicator in the first list, displaying the first interface in the first display area of the trifold display screen, and displaying the second interface of the first application in the second display area of the trifold display screen.

The first file may be the configuration file in the embodiment shown in FIG. 4A-1, FIG. 4A-2, and FIG. 4A-3. For example, for composition of content of the configuration file, refer to related descriptions of the configuration file W2 shown in FIG. 4B. In some embodiments, the first indication field may include an application indicator B1 and a field F1, and the first indicator of the first application may be the application indicator B1.

In some embodiments, the first list may be the application list 1 in the embodiment shown in FIG. 4A-1, FIG. 4A-2, and FIG. 4A-3.

Therefore, whether the first application supports in-application split-screen display when the device is in different forms may be determined based on the first indication field. The first indicator may be an indicator of the first application.

In a possible implementation, before the displaying the first interface of the first application on the trifold display screen, the method further includes: receiving a second operation of opening the first application by the user. The displaying the first interface of the first application on the trifold display screen specifically includes: in response to the second operation, displaying the first interface of the first application on the trifold display screen based on the first indicator in the first list.

For example, the second operation may be a tap operation performed by the user on an application icon of the first application.

Therefore, when the electronic device is in the fully unfolded state, after receiving the operation of opening the first application by the user and determining, based on the first list, that the first application supports in-application split-screen display (that is, the first list includes the first indicator), the electronic device may display the interfaces of the first application in the in-application split-screen display mode.

In a possible implementation, the first indication field includes a first form identifier, and there is a mapping relationship between the first form identifier and the fully unfolded state. The determining, based on the first indication field, that the first list includes the first indicator of the first application specifically includes: determining, based on the first form identifier in the first indication field, that the first list includes the first indicator.

For example, the first form identifier may be "Gstate" or "pad". It may be understood that this is merely an example. In some other embodiments, the first form identifier may be an identifier different from that in the foregoing embodiments. This is not limited in this application.

Therefore, when the first indication field includes the first form identifier, the electronic device may determine that the first application supports split-screen display when the electronic device is in the fully unfolded state, that is, determine that the first list includes the first indicator of the first application.

In a possible implementation, in response to the electronic device changing from the fully unfolded state to the semi-folded state, the method further includes: determining, based on the first indication field, that a second list includes the first indicator of the first application, where the second list indicates an application that supports in-application split-screen display when the electronic device is in the semi-folded state. The displaying the first interface on the second screen, and displaying the second interface on the third screen specifically includes: based on the first indicator in the second list, displaying the first interface on the second screen, and displaying the second interface on the third screen.

In some embodiments, the second list may be the application list 2 in the embodiment shown in FIG. 5A, FIG. 5B, and FIG. 5C.

Therefore, when detecting that the device form factor changes from the fully unfolded state to the semi-folded state, the electronic device may display the interfaces of the first application in the in-application split-screen display mode after determining, based on the second list, that the first application supports in-application split-screen display (that is, the second list includes the first indicator).

In a possible implementation, the first indication field includes a second form identifier, and there is a mapping relationship between the second form identifier and the semi-folded state. The determining, based on the first indication field, that the second list includes the first indicator of the first application specifically includes: determining, based on the second form identifier in the first indication field, that the second list includes the first indicator.

For example, the second form identifier may be "Fstate" or "semi-folded". It may be understood that this is merely an example. In some other embodiments, the second form identifier may be an identifier different from that in the foregoing embodiments. This is not limited in this application.

Therefore, when the first indication field includes the second form identifier, the electronic device may determine that the first application supports split-screen display when the electronic device is in the semi-folded state, that is, determine that the second list includes the first indicator of the first application.

In a possible implementation, the first file further includes a second indication field, and when the electronic device is in the fully unfolded state, the method further includes: determining, based on the second indication field, that the first list includes a second indicator of a second application; receiving a third operation of opening the second application by the user; in response to the third operation, displaying a third interface of the second application on the trifold display screen based on the second indicator in the first list, where the third interface includes a second control; receiving a fourth operation performed by the user on the second control; and in response to the fourth operation, based on the second indicator in the first list, displaying the third interface in the first display area, and displaying a fourth interface of the second application in the second display area.

For example, the second indication field may include an application indicator B2 and a field F2, and the second indicator of the second application may be the application indicator B2.

For example, the third operation may be a tap operation performed by the user on an application icon of the second application. The second control may be the control 904 shown in FIG. 9A. The fourth operation may be the tap operation performed by the user on the control 904. In response to the fourth operation, the electronic device may display the interface 700 shown in FIG. 7A. In this case, the third interface may be the interface 1, and the fourth interface may be the interface 2.

Therefore, when the electronic device is in the fully unfolded state, the electronic device may further determine, based on the second indication field, whether the second application supports in-application split-screen display when the electronic device is in the fully unfolded state (that is, determine whether the first list includes the second indicator of the second application). When the first list includes the second indicator of the second application, the electronic device may display the interfaces of the second application in the in-application split-screen display mode.

In a possible implementation, the method further includes: in response to the electronic device changing from the fully unfolded state to the semi-folded state, determining, based on the second indication field, that the second list does not include the second indicator, where the second list indicates the application that supports in-application split-screen display when the electronic device is in the semi-folded state; and displaying the third interface on the second screen and the third screen based on the second list.

For example, when the electronic device changes from the fully unfolded state to the semi-folded state, the interface of the electronic device may change from the interface 700 shown in FIG. 7A to the interface 710 shown in FIG. 7B.

Therefore, when the electronic device changes the device form factor, the electronic device may determine, based on the second indication field, whether the second application supports in-application split-screen display when the electronic device is in a changed device form factor (that is, determine whether the second list includes the second indicator). If the second list does not include the second indicator, the electronic device may display the interfaces of the second application in the regular display mode.

In a possible implementation, the method further includes: in response to the electronic device changing from the semi-folded state to the fully unfolded state, determining, based on the second indication field, that the first list includes the second indicator; and based on the second indicator in the first list, displaying the third interface in the first display area, and displaying the fourth interface of the second application in the second display area.

For example, when the electronic device changes from the semi-folded state to the fully unfolded state, the interface of the electronic device may change from the interface 710 shown in FIG. 7B to the interface 700 shown in FIG. 7A. In this case, the third interface may be the interface 1, and the fourth interface may be the interface 2.

Therefore, if the second list does not include the second indicator, and the first list includes the second indicator, after the electronic device changes from the semi-folded state to the fully unfolded state, the electronic device may display a plurality of interfaces of the second application in the in-application split-screen display mode.

In a possible implementation, when the electronic device is in the semi-folded state, the first screen is off, or the first screen is partially on.

The implementations of this application may be combined as required to achieve different technical effects.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A display method, applied to an electronic device, wherein the electronic device comprises a trifold display screen, the trifold display screen comprises two foldable edges, the trifold display screen is divided into three split screens by the two foldable edges, the three split screens comprise a first screen, a second screen, and a third screen, and the method comprises:
when the electronic device is in a fully unfolded state, displaying a first interface of a first application on the trifold display screen, wherein the first interface comprises a first control;
receiving a first operation performed by a user on the first control;
in response to the first operation, displaying the first interface in a first display area of the trifold display screen, and displaying a second interface of the first application in a second display area of the trifold display screen, wherein the first display area and the second display area do not overlap; and
in response to the electronic device changing from the fully unfolded state to a semi-folded state, displaying the first interface on the second screen, and displaying the second interface on the third screen, wherein
the fully unfolded state is a device form factor in which the first screen, the second screen, and the third screen are not folded, and the semi-folded state is a device form factor in which the first screen and the second screen face opposite directions, and the second screen and the third screen face a same direction.

2. The method according to claim 1, wherein the method further comprises:
in response to the electronic device changing from the semi-folded state to a fully folded state, displaying the first interface on the first screen, wherein the fully folded state is a device form factor in which the three split screens of the trifold display screen are folded based on the two foldable edges.

3. The method according to claim 2, wherein the method further comprises:
in response to the electronic device changing from the fully folded state to the semi-folded state, displaying the first interface on the second screen, and displaying the second interface on the third screen.

4. The method according to claim 1 or 3, wherein the method further comprises:
in response to the electronic device changing from the semi-folded state to the fully unfolded state, displaying the first interface in the first display area, and displaying the second interface in the second display area.

5. The method according to claim 2, wherein the method further comprises:
in response to the electronic device changing from the fully folded state to the fully unfolded state, displaying the first interface in the first display area, and displaying the second interface in the second display area.

6. The method according to any one of claims 1 to 5, wherein the displaying the first interface of the first application on the trifold display screen specifically comprises:
displaying the first interface of the first application in a third display area of the trifold display screen, wherein the third display area comprises a partial area of the first screen, the second screen, and a partial area of the third screen.

7. The method according to any one of claims 1 to 6, wherein the electronic device stores a first file, the first file comprises a first indication field, and when the electronic device is in the fully unfolded state, the method further comprises:
determining, based on the first indication field, that a first list comprises a first indicator of the first application, wherein the first list indicates an application that supports in-application split-screen display when the electronic device is in the fully unfolded state; and
in response to the first operation, the displaying the first interface in the first display area of the trifold display screen, and displaying the second interface of the first application in the second display area of the trifold display screen specifically comprises:
in response to the first operation, based on the first indicator in the first list, displaying the first interface in the first display area of the trifold display screen, and displaying the second interface of the first application in the second display area of the trifold display screen.

8. The method according to claim 7, wherein before the displaying the first interface of the first application on the trifold display screen, the method further comprises:
receiving a second operation of opening the first application by the user; and
the displaying the first interface of the first application on the trifold display screen specifically comprises:
in response to the second operation, displaying the first interface of the first application on the trifold display screen based on the first indicator in the first list.

9. The method according to claim 7 or 8, wherein the first indication field comprises a first form identifier, and there is a mapping relationship between the first form identifier and the fully unfolded state; and
the determining, based on the first indication field, that the first list comprises the first indicator of the first application specifically comprises:
determining, based on the first form identifier in the first indication field, that the first list comprises the first indicator.

10. The method according to any one of claims 7 to 9, wherein in response to the electronic device changing from the fully unfolded state to the semi-folded state, the method further comprises:
determining, based on the first indication field, that a second list comprises the first indicator of the first application, wherein the second list indicates an application that supports in-application split-screen display when the electronic device is in the semi-folded state; and
the displaying the first interface on the second screen, and displaying the second interface on the third screen specifically comprises:
based on the first indicator in the second list, displaying the first interface on the second screen, and displaying the second interface on the third screen.

11. The method according to claim 10, wherein the first indication field comprises a second form identifier, and there is a mapping relationship between the second form identifier and the semi-folded state; and
the determining, based on the first indication field, that the second list comprises the first indicator of the first application specifically comprises:
determining, based on the second form identifier in the first indication field, that the second list comprises the first indicator.

12. The method according to any one of claims 7 to 11, wherein the first file further comprises a second indication field, and when the electronic device is in the fully unfolded state, the method further comprises:
determining, based on the second indication field, that the first list comprises a second indicator of the second application;
receiving a third operation of opening the second application by the user;
in response to the third operation, displaying a third interface of the second application on the trifold display screen based on the second indicator in the first list, wherein the third interface comprises a second control;
receiving a fourth operation performed by the user on the second control; and
in response to the fourth operation, based on the second indicator in the first list, displaying the third interface in the first display area, and displaying a fourth interface of the second application in the second display area.

13. The method according to claim 12, wherein the method further comprises:
in response to the electronic device changing from the fully unfolded state to the semi-folded state, determining, based on the second indication field, that the second list does not comprise the second indicator, wherein the second list indicates the application that supports in-application split-screen display when the electronic device is in the semi-folded state; and
displaying the third interface on the second screen and the third screen based on the second list.

14. The method according to claim 13, wherein the method further comprises:
in response to the electronic device changing from the semi-folded state to the fully unfolded state, determining, based on the second indication field, that the first list comprises the second indicator; and
based on the second indicator in the first list, displaying the third interface in the first display area, and displaying the fourth interface of the second application in the second display area.

15. The method according to any one of claims 1 to 14, wherein when the electronic device is in the semi-folded state, the first screen is off, or the first screen is partially on.

16. An electronic device, comprising one or more memories and one or more processors, wherein the one or more memories are coupled to the one or more processors, the one or more memories are configured to store computer program code, the computer program code comprises computer instructions, and when the one or more processors execute the computer instructions, the electronic device is enabled to perform the display method according to any one of claims 1 to 15.

17. A computer-readable storage medium, comprising instructions, wherein when the instructions are run on a processor of an electronic device, the electronic device is enabled to perform the display method according to any one of claims 1 to 15.

18. A computer program product, wherein when the computer program product runs on an electronic device, the electronic device is enabled to perform the display method according to any one of claims 1 to 15.
